# EUROPEAN PATENT SPECIFICATION

(11) **EP 4 059 407 B1**
(45) Date of publication and mention of the grant of the patent: **31.07.2024**
(21) Application number: 21870854.3
(22) Date of filing: 03.06.2021
(51) Int. Cl.: G05D 1/00, A47L 9/28, A47L 11/40

(54) **CLEANING CONTROL METHOD BASED ON DENSE OBSTACLES**
REINIGUNGSSTEUERVERFAHREN BASIEREND AUF DICHTEN HINDERNISSEN
PROCÉDÉ DE COMMANDE DE NETTOYAGE SUR LA BASE D'OBSTACLES DENSES

(30) Priority: 28.09.2020 CN 202011041176
(43) Date of publication of application: 21.09.2022
(73) Proprietor: Amicro Semiconductor Co., Ltd., Hengqin New District, Zhuhai City Guangdong 519000 (CN)
(72) Inventor: LI, Yongyong, Zhuhai, Guangdong 519000 (CN); LAI, Qinwei, Zhuhai, Guangdong 519000 (CN); XIAO, Gangjun, Zhuhai, Guangdong 519000 (CN)
(74) Representative: HGF
(86) International application number: PCT/CN2021/098143
(87) International publication number: WO 2022/062470

(56) References cited:
- WO-A1-2012/099694
- CN-A- 107 296 569
- CN-A- 109 725 650
- CN-A- 110 906 934
- CN-A- 112 137 529
- CN-A- 112 180 924
- JP-A- 2020 140 324
- US-A- 5 006 988
- US-A1- 2020 253 445

## Description

### Cross-Reference to Related Application

The present disclosure claims the priority of Chinese Patent Application No. 202011041176.3, filed to the China National Intellectual Property Administration on September 28, 2020 and entitled " Method for Controlling Cleaning Based on Dense Obstacles".

### Technical Field

The present disclosure relates to the technical field of cleaning control of robots, and in particular to a method for controlling cleaning based on dense obstacles.

### Background

A sweeping robot is generally used to cover and clean an environment to be cleaned in cleaning coverage regions that include common corners in a family environment, regions around chair feet, regions around table feet, etc. In the family environment, since passable regions delimited by the chair feet and table feet are narrow, the chair feet and table feet can be regarded as densely distributed obstacles. Gaps between the chair feet and between the table feet as well as the regions around the chair feet and around tables are regions that the sweeping robot tends to miss.

In addition, a patent document with publication number WO 2012/099694 A1 discloses: A method of navigating an autonomous coverage robot on a floor includes controlling movement of the robot across the floor in a cleaning mode, receiving a sensor signal indicative of an obstacle, rotating the robot away from the sensed obstacle, determining a change in the received sensor signal during at least a portion of the rotation of the robot away from the sensed obstacle, and identifying the sensed obstacle based at least in part on the determined change in the received sensor signal.

In addition, a patent document with publication number JP 2020 140324 A discloses: To propose an autonomous electric cleaner adapted to improve the efficiency of electric power consumption and positively clean dust without missing thereof. SOLUTION : An autonomous electric cleaner 1, provided that a place-to-clean is represented as a single zone A or divided into a plurality of zones A, has a plurality of travel types TP including a reflective travel type TP1 that when detecting a boundary B of the zone A or an obstacle O, cleaning is performed while changing a travel direction and a parallel travel type TP2 that when detecting the boundary B of the zone A or the obstacle O, cleaning is performed while moving the travel direction in parallel. By identifying a zone characteristic AP in which a zone A the obstacle O detected by an obstacle detecting unit 17 is at a predetermined threshold is given as a dense obstruction zone HDA and a zone A the obstacle O detected by the obstacle detecting unit 17 is less than the threshold is given as a coarse obstruction zone LDA, traveling is performed by the reflective travel type TP1 within the dense obstruction zone HDA while traveling is performed by the parallel travel type TP2 within the coarse obstruction zone LDA. SELECTED DRAWING : Figure 6 COPYRIGHT : (C)2020, JPO&INPIT.

In addition, a patent document with publication number US 2020/253445 A1 discloses: A robot cleaner for generating accurate travelling records regardless of floor material is provided. The robot cleaner includes a main body, a drive wheel installed on the main body, a drive motor configured to rotate the drive wheel, a travelling sensor configured to detect rotation of the drive wheel, a first optical sensor configured to detect an obstacle located in a moving direction of the main body, a cleaning tool configured to clean a floor, a second optical sensor configured to acquire an image of the floor, and a processor electrically connected to the drive motor, the travelling sensor, the first optical sensor, and the second optical sensor The processor is configured to control a memory to store a movement record of the main body based on an output of the travelling sensor and an output of the second optical sensor, calculate a distance moved by the main body based on an output of the second optical sensor in response to detection of an obstacle, and control a cleaning tool to clean a floor in the vicinity of the obstacle in response to the distance travelled by the main body that is calculated as being greater than a threshold distance.

### Summary

The present disclosure discloses a method for controlling cleaning based on dense obstacles. A specific technical solution is as follows:
The method for controlling cleaning based on the dense obstacles includes: step 1, marking dense obstacle points according to a number feature of grids of obstacles framed by a sliding rectangular frame which is preset in a grid map, and then proceeding to step 2; the step 2, planning, according to the dense obstacle points marked in the grid map, navigation paths of which an end point position is corresponding to one dense obstacle point and which does not pass grids of other obstacles, and then proceeding to step 3; and the step 3, controlling, according to an obstacle collision detected by the cleaning robot, the cleaning robot to complete traveling a circle around an obstacle currently in collision in a process of navigating the cleaning robot to an actual position corresponding to each of the dense obstacle points according to the navigation paths planned in the step 2, and marking a cleaning state of a grid corresponding to the obstacle currently in collision, and the cleaning robot keeps conducting cleaning operations while traveling around the obstacle currently in collision.

Optionally, the method for controlling cleaning further including: step 4, controlling, after the cleaning robot is navigated to traverse all of the dense obstacle points which are marked according to the navigation paths planned in the step 2, the cleaning robot to be navigated to an uncleaned region, then returning to the step 1 to mark new dense obstacle points, and repeating previous steps until the cleaning robot traverses all regions corresponding to the grid map.

Optionally, in the step 3, controlling, according to the obstacle collision detected by the cleaning robot, the cleaning robot to complete traveling the circle around the obstacle currently in collision in the process of navigating the cleaning robot to the actual position corresponding to each of the dense obstacle points according to the navigation paths planned in the step 2, and marking the cleaning state of the grid corresponding to the obstacle currently in collision includes: controlling, before the cleaning robot is navigated to the actual position corresponding to the dense obstacle point to be cleaned according to the navigation paths planned in the step 2, the cleaning robot to travel the circle around the obstacle currently in collision under a condition that the obstacle collision is detected, and marking, after the cleaning robot completes traveling the circle around the obstacle currently in collision, the obstacle as an obstacle-cleaned state; and controlling, when the cleaning robot is navigated to the actual position corresponding to the dense obstacle point to be cleaned, the cleaning robot to travel a circle around an obstacle at the dense obstacle point to be cleaned under a condition that a collision with the obstacle at the dense obstacle point to be cleaned is detected, and marking, after the cleaning robot completes traveling a circle around the obstacle at the dense obstacle point to be cleaned, the dense obstacle point to be cleaned as the obstacle-cleaned state, and the dense obstacle point to be cleaned is a pre-configured dense obstacle point for cleaning.

Optionally, the step 3 further includes: marking, after the cleaning robot is navigated to the actual position corresponding to the dense obstacle point to be cleaned, the dense obstacle point to be cleaned as an area-cleaned state under a condition that the cleaning robot is detected to directly pass the actual position corresponding to the dense obstacle point to be cleaned, and the dense obstacle point to be cleaned is a pre-selected target obstacle to be cleaned.

Optionally, when all the dense obstacle points marked in the step 1 are marked as the obstacle-cleaned state or area-cleaned state correspondingly, the step 4 is executed.

Optionally, the step 3 further includes: step 31, controlling, before the cleaning robot is navigated to the actual position corresponding to the dense obstacle point to be cleaned according to a first preset navigation path, the cleaning robot to travel a circle around an obstacle under a condition that a collision with the obstacle is detected, simultaneously keeping detecting whether the cleaning robot is navigated to the actual position corresponding to the dense obstacle point to be cleaned, and then proceeding to step 32; the step 32, proceeding to step 33 under a condition that the cleaning robot is detected not to be navigated to the actual position corresponding to the dense obstacle point to be cleaned when the cleaning robot completes traveling the circle around the obstacle which is same; the step 33, determining whether a number of times of executing the step 32 reaches 3, if the number of times of executing the step 32 reaches 3, marking the dense obstacle point to be cleaned as the obstacle-cleaned state, and if the number of times of executing the step 32 does not reach 3, proceeding to step 34; the step 34, searching out a second preset navigation path from all of the navigation paths planned in the step 2, and an end point grid position of the second preset navigation path is the dense obstacle point to be cleaned, and the second preset navigation path is different from the first preset navigation path, and then proceeding to step 35; and the step 35, controlling the cleaning robot to move along the second preset navigation path searched out in the step 34, and repeating the step 31 to the step 34 until the cleaning robot is detected to be navigated to the actual position corresponding to the dense obstacle point to be cleaned or the number of times of executing the step 32 is determined to reach 3, and after returning from the step 35 to the step 31, the first preset navigation path in the step 31 is replaced with the second preset navigation path in the step 34, and the navigation paths planned in the step 2 include the first preset navigation path and the second preset navigation path.

Optionally, the detecting whether the cleaning robot is navigated to the actual position corresponding to the dense obstacle point to be cleaned includes: determining that the cleaning robot is navigated to the actual position corresponding to the dense obstacle point to be cleaned under a condition that a distance between a current position of the cleaning robot and the actual position corresponding to the dense obstacle point to be cleaned is less than a quarter of a diameter of a body of the cleaning robot, and determining that the cleaning robot is not navigated to the actual position corresponding to the dense obstacle point to be cleaned under the condition that the distance between the current position of the cleaning robot and the actual position corresponding to the dense obstacle point to be cleaned is not less than the quarter of the diameter of the body of the cleaning robot, and the fact that the cleaning robot is moved to the actual position corresponding to the dense obstacle point to be cleaned means that the cleaning robot reaches a pre-configured target position around a contour of the obstacle corresponding to the dense obstacle point to be cleaned.

Optionally, judging whether the cleaning robot completes traveling the circle around the obstacle currently in collision includes: acquiring a collision position of the cleaning robot and the obstacle before controlling the cleaning robot to travel the circle around the obstacle; and then controlling the cleaning robot to start to travel around the obstacle from the collision position, determining whether a rotation angle of the cleaning robot is larger than or equal to 360 degrees and whether a distance between a current position of the cleaning robot and the collision position is less than a quarter of a diameter of a body of the cleaning robot, if the rotation angle of the cleaning robot is larger than or equal to 360 degrees and the distance between the current position of the cleaning robot and the collision position is less than the quarter of the diameter of the body of the cleaning robot, determining that the cleaning robot completes traveling the circle around the obstacle currently in collision, and if the rotation angle of the cleaning robot is not larger than or equal to 360 degrees, or the distance between the current position of the cleaning robot and the collision position is not less than the quarter of the diameter of the body of the cleaning robot, determining that the cleaning robot does not complete traveling the circle around the obstacle currently in collision.

Optionally, judging whether the cleaning robot completes traveling the circle around the obstacle currently in collision includes: acquiring a collision position of the cleaning robot and the obstacle before controlling the cleaning robot to travel the circle around the obstacle; and then controlling the cleaning robot to start to travel around the obstacle from the collision position, determining whether a rotation angle of the cleaning robot is larger than or equal to 400 degrees, if the rotation angle of the cleaning robot is larger than or equal to 400 degrees, determining that the cleaning robot completes traveling the circle around the obstacle currently in collision, and if the rotation angle of the cleaning robot is not larger than or equal to 400 degrees, determining that the cleaning robot does not complete traveling the circle around the obstacle currently in collision.

Optionally, the step 1 specifically includes: step 11, controlling the cleaning robot to conduct cleaning in a region to be cleaned according to a preset planning path in a "'7" shape, and controlling the cleaning robot to mark the grid of the obstacle in the grid map created in real time without bypassing the obstacle when the cleaning robot detects the obstacle in a cleaning process, and the grids of the obstacles include grids of obstacles distributed at intervals; step 12, setting, according to a number of the grids of the obstacles distributed at intervals framed by the sliding rectangular frame in a process that the sliding rectangular frame is moved in the grid map, a dense obstacle standard unit region on the grid map, and then setting a preset number of positioning rectangular frames having consistent sizes with the sliding rectangular frame for taking a center of the dense obstacle standard unit region as a creation starting point, and then controlling the positioning rectangular frames to move, from the creation starting point, in a preset number of traversal directions on the grid map which are symmetrical about the center of the creation starting point respectively; and step 13, controlling each of the positioning rectangular frames to continuously move in the traversal direction correspondingly or not continuously move in the traversal direction correspondingly according to a relation between a ratio of an area of a new region framed by each of the positioning rectangular frames after movement relative to that before movement to an area of a region framed by the positioning rectangular frame correspondingly before movement and a change of the number of the grids of the obstacles distributed at intervals framed by the positioning rectangular frame which is same before and after movement, and marking the grids of the obstacles distributed at intervals framed by each of the positioning rectangular frames as the dense obstacle points, and each of the positioning rectangular frames is configured to be moved once in the traversal direction correspondingly according to a unit traversal distance.

Optionally, the step 1 further includes: step 14, combining, when the preset number of positioning rectangular frames stop moving, the grids corresponding to all of the dense obstacle points which are marked to create a dense obstacle region.

Optionally, the grids of the obstacles distributed at intervals are grids of obstacles except grids of N obstacles distributed continuously in the grids of the obstacles marked in the step 11, and N is a number of continuously distributed grids set according to a pre-configured grid size in the grid map and an actual size of the obstacle marked in the region to be cleaned.

Optionally, in the step 12, setting the dense obstacle standard unit region on the grid map includes: controlling the sliding rectangular frame to move on the grid map, marking the grids of the obstacles distributed at intervals framed by the sliding rectangular frame on the grid map as an uncleaned state, and recording the number of the grids of the obstacles framed and distributed at intervals in real time; and setting a rectangular region currently framed by the sliding rectangular frame as the dense obstacle standard unit region when the number of the grids of the obstacles distributed at intervals framed by the sliding rectangular frame is larger than or equal to a first density threshold, and the first density threshold is used to indicate a distribution density of the dense obstacle points in the grid map and is enough to make gap regions between the obstacles distributed at intervals become cleaning-missed regions of the cleaning robot.

Optionally, in the step 13, controlling each of the positioning rectangular frames to continuously move in the traversal direction correspondingly or not continuously move in the traversal direction correspondingly according to the relation between the ratio of the area of the new region framed by each of the positioning rectangular frames after movement relative to that before movement to the area of the region framed by the positioning rectangular frame correspondingly before movement and the change of the number of the grids of the obstacles distributed at intervals framed by the positioning rectangular frame which is same before and after movement includes: judging, every time one of the positioning rectangular frames is moved once in the traversal direction correspondingly by the unit traversal distance, whether a ratio of the number of the grids of the obstacles distributed at intervals framed by the positioning rectangular frame after movement to the number of the grids of the obstacles distributed at intervals framed by the positioning rectangular frame before movement is larger than or equal to an area ratio of a region, which does not overlap the positioning rectangular frame before movement, in the positioning rectangular frame after movement, if the ratio of the number of the grids of the obstacles distributed at intervals framed by the positioning rectangular frame after movement to the number of the grids of the obstacles distributed at intervals framed by the positioning rectangular frame before movement is larger than or equal to the area ratio of the region, controlling the positioning rectangular frame to continuously to move in a same traversal direction by the unit traversal distance, and if the ratio of the number of the grids of the obstacles distributed at intervals framed by the positioning rectangular frame after movement to the number of the grids of the obstacles distributed at intervals framed by the positioning rectangular frame before movement is not larger than or equal to the area ratio of the region, controlling the positioning rectangular frame to stop moving, and the area ratio of the region, which does not overlap the positioning rectangular frame before movement, in the positioning rectangular frame after movement is a ratio of the area of the new region framed by the positioning rectangular frame after movement relative to that before movement to the area of the region framed by the positioning rectangular frame which is same before movement.

Optionally, the positioning rectangular frames are square frames, and the preset number is 8; and the traversal directions which are symmetrical about the center of the creation starting point respectively include: a rightward direction of a horizontal side length of a square frame configured as the dense obstacle standard unit region, a leftward direction of the horizontal side length of the square frame configured as the dense obstacle standard unit region, an upward direction of a longitudinal side length of the square frame configured as the dense obstacle standard unit region, a downward direction of the longitudinal side length of the square frame configured as the dense obstacle standard unit region, an upper left direction of a diagonal of the square frame configured as the dense obstacle standard unit region, a lower left direction of the diagonal of the square frame configured as the dense obstacle standard unit region, an upper right direction of the diagonal of the square frame configured as the dense obstacle standard unit region, and a lower right direction of the diagonal of the square frame configured as the dense obstacle standard unit region.

Optionally, in the step 11, controlling the cleaning robot to conduct cleaning in the region to be cleaned according to the preset planning path in the " 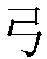 " shape without bypassing the obstacle when the cleaning robot detects the obstacle in the cleaning process includes: controlling the cleaning robot to travel along the preset planning path in the " 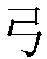 " shape, and controlling, when the cleaning robot collides with one obstacle on a preset linear path of the preset planning path in the " 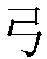 " shape, a body of the cleaning robot to rotate by a preset angle, so as to move the cleaning robot to an uncleaned linear path having a preset distance from a preset linear path section by adjusting a current advancing direction, and the uncleaned linear path belongs to the preset planning path in the " 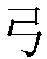 " shape and is parallel to the preset linear path, the preset distance is a preset multiple of a spacing distance between two adjacent parallel linear paths of the preset planning path in the " 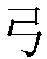 " shape, the preset multiple is related to a size of the obstacle currently in collision with the cleaning robot, and the cleaning robot conducts cleaning operations in a process of moving from the preset linear path to the uncleaned linear path spaced from the preset linear path by the preset distance.

Optionally, in a process of controlling the body of the cleaning robot to rotate by the preset angle, under a condition that the cleaning robot is detected to collide with one obstacle, the cleaning robot is controlled to travel along an edge of the obstacle until reaching the uncleaned linear path having the preset distance from the preset linear path, so as to keep cleaning planned in the" 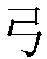 " shape, without completely bypassing the obstacle.

Optionally, in a process of controlling the cleaning robot to move from a preset starting point position to the preset linear path, under a condition that the obstacle collision is detected, the cleaning robot is controlled to search out other uncleaned linear paths of the preset planning path in the " 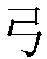 " shape, so that the cleaning robot continuously conducts cleaning according to uncleaned paths searched out, so as to avoid the obstacle detected before searching, and the preset starting point position is located outside the preset linear path.

### Brief Description of the Drawings

Fig. 1 is a flowchart of a method for controlling cleaning based on dense obstacles disclosed in an embodiment of the present disclosure.
Fig. 2 is a distribution diagram of obstacles marked in a region to be cleaned as disclosed in an embodiment of the present disclosure.
Fig. 3 is a schematic diagram showing framing of grids of obstacles by movement of positioning rectangular frames in 8 arrow directions in the region to be cleaned in Fig. 2.

### Detailed Description of the Embodiments

The technical solutions in embodiments of the present disclosure will be described in detail below with reference to the drawings in the embodiments of the present disclosure. In the disclosure, orientations or positional relations indicated by the terms "upper", "lower", "inside", "middle", "outside", "front", "rear", etc. are based on the orientations or positional relations shown in the accompanying drawings. The terms are mainly for better description of the disclosure and the embodiments, rather than limiting that an apparatus, an element or a component referred to must have a particular orientation or be constructed and operated in a particular orientation.

In addition, some of the terms can be used to indicate the orientations or positional relations, and can also be used to indicate other meanings. For example, the term "upper" can also be used to indicate some attachment or connection relation in some cases. For those of ordinary skill in the art, the specific meanings of the terms in the disclosure can be understood according to specific cases.

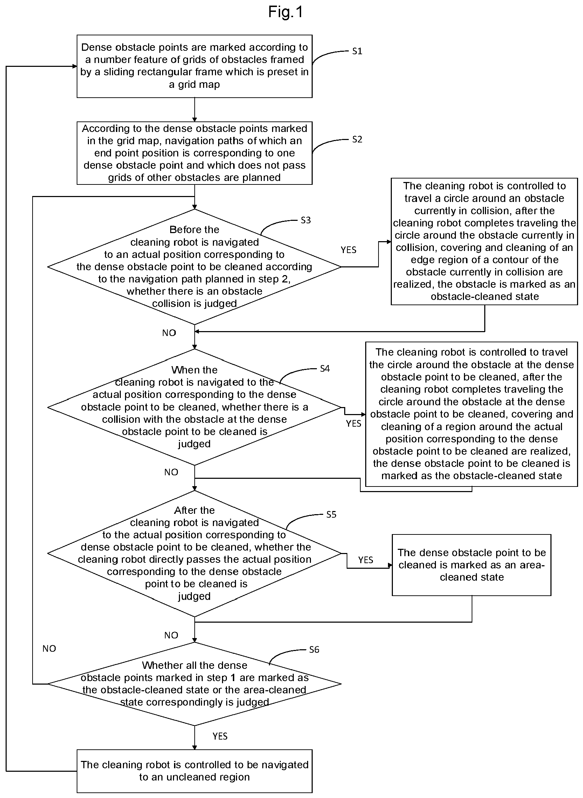

An embodiment of the present disclosure discloses a method for controlling cleaning based on dense obstacles. Through obstacle collisions and obstacle-bypassing traveling, regions around the dense obstacles are traversed and cleaned in an obstacle bypassing manner, so that only a few resources (including hardware and software resources) are required to control a cleaning robot to conduct cleaning in narrow passable regions among chair feet and table feet, so as to avoid missing cleaning of gap regions among the dense obstacles. As shown in Fig. 1, the method for controlling cleaning specifically includes:
Step 1, dense obstacle points are marked according to a number feature of grids of obstacles framed by a sliding rectangular frame which is preset in a grid map, and then step 2 is executed. Preferably, the grids of the obstacles on the grid map are marked in advance by planning to clean a region to be cleaned by the cleaning robot, the region to be cleaned includes grids of continuously distributed obstacles and grids of obstacles distributed at intervals, the grids of the obstacles distributed at intervals include grids of densely distributed obstacles, and an identification standard of the grids of the densely distributed obstacles is established based on the number of the grids of the corresponding obstacles distributed at intervals movably framed by the sliding rectangular frame which is preset.
Step 2, according to the dense obstacle points marked in the grid map, navigation paths of which an end point position is corresponding to one dense obstacle point and which does not pass grids of other obstacles are planned, and then step 3 is executed. step 2 can be the following step that according to the dense obstacle points marked in the grid map, the navigation path of which the end point position is corresponding to the dense obstacle point and which does not pass the grids of other obstacles is planned in the region to be cleaned. It should be noted that the normally planned navigation path cannot pass the grids of the obstacles without deviation of the map, and the end point position of the navigation path is the dense obstacle point.
Step 3, before the cleaning robot is navigated to an actual position corresponding to the dense obstacle point to be cleaned according to the navigation path planned in step 2, whether there is an obstacle collision is judged, and if so, the cleaning robot is controlled to travel a circle around an obstacle currently in collision, after the cleaning robot completes traveling the circle around the obstacle currently in collision, covering and cleaning of an edge region of a contour of the obstacle currently in collision are realized, the obstacle is marked as an obstacle-cleaned state, and then step 4 is executed; and if not so, step 4 is directly executed. It should be noted that the cleaning robot keeps conducting cleaning operations while traveling around the obstacle currently in collision. The navigation path planned in step 2 cannot pass the grids of other obstacles without deviation of the map, and the end point position of the navigation path is the dense obstacle point to be cleaned.

It should be noted that sensors for detecting collisions include, but are not limited to, an infrared sensor, an ultrasonic sensor or a physical collision apparatus. The dense obstacle point to be cleaned is selected from the dense obstacle points marked in step 1 and used as a target position to be cleaned.

Step 4, when the cleaning robot is navigated to the actual position corresponding to the dense obstacle point to be cleaned, whether there is a collision with the obstacle at the dense obstacle point to be cleaned is judged, and if so, the cleaning robot is controlled to travel the circle around the obstacle at the dense obstacle point to be cleaned, after the cleaning robot completes traveling the circle around the obstacle at the dense obstacle point to be cleaned, covering and cleaning of a region around the actual position corresponding to the dense obstacle point to be cleaned are realized, the dense obstacle point to be cleaned is marked as the obstacle-cleaned state, and then step 5 is executed; and if not so, step 5 is directly executed. It should be noted that the cleaning robot keeps conducting cleaning operations while traveling around the obstacle at the dense obstacle point to be cleaned.

The previous steps achieve that: in a process of navigating the cleaning robot to the actual position corresponding to each of the dense obstacle points according to the navigation path planned in step 2 (that is, before navigating and moving the cleaning robot to the actual position corresponding to the dense obstacle point and exactly navigating and moving the cleaning robot to the actual position corresponding to the dense obstacle point ), the cleaning robot is controlled to travel the circle around the obstacle currently in collision according to the obstacle collision detected by the cleaning robot, and a cleaning state of the grid corresponding to the obstacle currently in collision is marked. Compared with the prior art, in the embodiment, obstacle-bypassing traveling modes of the cleaning robot before and when reaching the actual position corresponding to the dense obstacle point are planned, and obstacle influence of a map drift error on actual navigation of the cleaning robot is avoided, so that the cleaning robot is navigated to the actual position corresponding to the dense obstacle point according to the navigation path planned according to the map, and the situation that the navigation path that does not pass the grid of the obstacle becomes the navigation path that actually covers the obstacle due to a map drift is reduced. It should be noted that the navigation path normally planned in step 2 cannot pass the grid of the obstacle without deviation of the map, and the end point position of the navigation path is the dense obstacle point. Then, the cleaning robot is controlled to complete cleaning narrow gap positions among different dense obstacle points and a narrow region around a currently reaching dense obstacle point, so as to avoid missing cleaning of a distribution region of the dense obstacles.

Step 5, after the cleaning robot is navigated to the actual position corresponding to the dense obstacle point to be cleaned, whether the cleaning robot directly passes the actual position corresponding to the dense obstacle point to be cleaned is judged, and if so, the dense obstacle point to be cleaned is marked as an area-cleaned state, that is, the cleaning robot reaches an actual position occupied by the obstacle corresponding to the dense obstacle point to be cleaned along the navigation path planned in step 2, which indicates that there is no obstacle at the actual position corresponding to the dense obstacle point to be cleaned, the map has a positioning mark error, which needs to be eliminated, but the cleaning robot still traverses and cleans the actual position corresponding to the dense obstacle point to be cleaned, so in the preferred embodiment, the grid that is marked as a dense obstacle point but does not meet the actual position in the grid map is marked as the area-cleaned state, thereby preventing the cleaning robot from cleaning and traversing the position again and avoiding influence of grid map errors, and then step 6 is executed; and if not so, step 6 is directly executed. Thereby completing covering and cleaning of a distribution region of the marked dense obstacles.

Step 6, whether all the dense obstacle points marked in step 1 are marked as the obstacle-cleaned state or the area-cleaned state correspondingly is judged, that is, whether the cleaning robot traverses all the dense obstacle points marked once while being navigated along the navigation path planned in step 2 and cleaning states of the grids corresponding to the obstacles are marked correspondingly is judged, if so, step 7 is executed, and if not so, step 3 is returned to and step 3-step 5 are conducted repeatedly until all the dense obstacle points marked in step 1 are cleaned, traversed and marked.

Step 7, the cleaning robot is controlled to be navigated to an uncleaned region, then step 1 is returned to, so as to mark new dense obstacle points, and the previous steps are repeated until the cleaning robot traverses all of the regions corresponding to the grid map. Specifically, with step 1-step 7 are conducted, after the cleaning robot can traverse all the dense obstacle points which are marked in a region to be cleaned along the navigation path planned in step 2, the cleaning robot is controlled to be moved to a non-traversed region, then step 1 is returned to, so as to mark the new dense obstacle points, and the previous steps are repeated until the cleaning robot traverses all of the regions corresponding to the grid map, thereby completing covering and cleaning of a distribution region of all existing dense obstacles. Combined with the said technical solution, covering and cleaning of empty regions in a region to be cleaned and gap regions among the dense obstacle points marked in the region to be cleaned are completed.

Compared with the prior art, in step 1-step 7, position distribution information of the dense obstacles is acquired through obstacle collisions and obstacle-bypassing traveling, and a laser sensor is not required to participate in line scanning and positioning of a dense obstacle group, which saves computing resources compared with using the laser sensor to directly scan and mark dense obstacle points in the map, so that only a few running memory resources (including the hardware and the software resources) are required to control a sweeping robot to clean the narrow passable regions among the chair feet and the table feet, so as to avoid missing cleaning of the gap regions among the dense obstacles.

As an embodiment, a process of controlling the cleaning robot to navigate and move to the actual position corresponding to the dense obstacle point to be cleaned according to a first preset navigation path includes before the cleaning robot is moved to the actual position corresponding to the dense obstacle point to be cleaned according to the first preset navigation path and when the cleaning robot is moved to the actual position corresponding to the dense obstacle point to be cleaned according to the first preset navigation path, and it is necessary to keep detecting whether the cleaning robot is navigated to the actual position corresponding to the dense obstacle point to be cleaned in real time. The navigation paths planned in step 2 include the first preset navigation path and a second preset navigation path.

### Step 3 further includes:

Step 31, before the cleaning robot is moved to the actual position corresponding to the dense obstacle point to be cleaned according to the first preset navigation path, the cleaning robot is controlled to start to travel the circle around the obstacle currently in collision under the condition that the collision with the obstacle is detected by the cleaning robot (which is not the obstacle at the dense obstacle point to be cleaned), meanwhile, whether the cleaning robot is navigated to the actual position corresponding to the dense obstacle point to be cleaned is kept being detected, and then step 32 is executed. It should be noted that sensors for detecting collisions include, but are not limited to, an infrared sensor, an ultrasonic sensor or a physical collision apparatus. The dense obstacle point to be cleaned is selected from the dense obstacle points marked in step 1 and used as a target position to be cleaned.

Preferably, in step 31, the method of detecting whether the cleaning robot is navigated to the actual position corresponding to the dense obstacle point to be cleaned includes: it is determined that the cleaning robot is navigated (moved) to the actual position corresponding to the dense obstacle point to be cleaned under a condition that a distance between a current position of the cleaning robot and the actual position corresponding to the dense obstacle point to be cleaned is less than a quarter of a diameter of a body of the cleaning robot, and it is determined that the cleaning robot is not navigated (is not moved) to the actual position corresponding to the dense obstacle point to be cleaned under the condition that the distance between the current position of the cleaning robot and the actual position corresponding to the dense obstacle point to be cleaned is not less than the quarter of the diameter of the body of the cleaning robot. So that influence of errors such as a map drift is avoided, and robustness of obstacle-bypassing determination is improved, thereby improving precision of navigation and positioning of the cleaning robot. The dense obstacle point to be cleaned is a pre-configured dense obstacle point for cleaning of the cleaning robot.

Step 32, step 33 is executed under a condition that the cleaning robot is detected not to be navigated to the actual position corresponding to the dense obstacle point to be cleaned when the cleaning robot completes traveling a circle around the obstacle currently in collision. In a process that the cleaning robot is navigated and moved to the actual position corresponding to the dense obstacle point to be cleaned according to the first preset navigation path, when the cleaning robot completes traveling a circle around the same obstacle (which is the obstacle in collision detected in step 3), whether the cleaning robot is moved to the actual position corresponding to the dense obstacle point to be cleaned is detected, which indicates that whether the cleaning robot is moved to a region around a contour of the obstacle at the dense obstacle point to be cleaned is detected.

In step 32, a judgment method for determining that the cleaning robot completes traveling the circle around the obstacle currently in collision includes two embodiments. Specifically, one embodiment includes: a collision position of the cleaning robot and the obstacle is acquired before the cleaning robot is controlled to travel the circle around the obstacle; and then the cleaning robot is controlled to start to travel around the obstacle from the collision position, whether a rotation angle of the cleaning robot is larger than or equal to 360 degrees and whether a distance between the current position of the cleaning robot and the collision position is less than the quarter of the diameter of the body of the cleaning robot are determined in real time, if so, it is determined that the cleaning robot completes traveling the circle around the obstacle, and if not so, it is determined that the cleaning robot does not complete traveling the circle around the obstacle. For example, when the cleaning robot is moved to the chair feet and collides with the chair feet, because a distance between the chair feet is less than the diameter of the body of the cleaning robot, the cleaning robot cannot completely travel the circle around a current chair in collision. Compared with the prior art, in the embodiment, a collision point of the cleaning robot and the obstacle is taken as an obstacle-bypassing starting point, and whether the cleaning robot completes traveling the circle around the obstacle is determined according to the rotation angle of the current position of the cleaning robot relative to the obstacle-bypassing starting point and a linear distance between the current position of the cleaning robot and the obstacle-bypassing starting point, so that influence of errors such as a map drift is avoided, and robustness of obstacle-bypassing determination is improved.

Another embodiment includes: a collision position of the cleaning robot and the obstacle is acquired before the cleaning robot is controlled to travel the circle around the obstacle; and then the cleaning robot is controlled to start to travel around the obstacle from the collision position, whether a rotation angle of the cleaning robot is larger than or equal to 400 degrees is determined in real time, if so, it is determined that the cleaning robot completes traveling the circle around the obstacle, and if not so, it is determined that the cleaning robot does not complete traveling the circle around the obstacle. In the embodiment, redundancy of 40 degrees of the rotation angle is provided for determining whether the cleaning robot completes traveling the circle around the obstacle, thereby improving determination precision.

Step 33, whether a number of times of executing step 32 reaches 3 is judged, if so, the dense obstacle point to be cleaned is marked as the obstacle-cleaned state, and if not so, step 34 is executed. Specifically, under a condition that the cleaning robot cannot reach a same dense obstacle point to be cleaned by continuously changing the navigation path twice, a search for the actual position (a physical position in a cleaning work region) corresponding to the dense obstacle point to be cleaned can be abandoned by the cleaning robot, but in a process of searching for an actual physical position corresponding to the dense obstacle point three consecutive times, the cleaning robot can complete covering and cleaning of the region around the actual position corresponding to the dense obstacle point to be cleaned. For example, when moving to a region around the chair feet, the cleaning robot collides with other obstacles, because the distance between the chair feet is less than the diameter of the body of the cleaning robot, the cleaning robot is not moved to a gap region between the chair feet in a process of traveling the circle around the obstacle currently in collision, but avoids the gap region between the chair feet. A position passed by the cleaning robot in an obstacle-bypassing traveling process is relatively close to the chair feet, and finally the cleaning robot failed to search for an actual position corresponding to the dense obstacle point of the chair feet through three consecutive times of navigations, but the cleaning robot completes covering and cleaning of the gap region between the chair feet in a navigation and obstacle-bypassing process. The method is suitable for navigation and cleaning in more obstacle distribution scenes. It should be noted that, in the embodiment, moving to the actual position corresponding to the dense obstacle point to be cleaned does not indicate reaching the actual position occupied by the obstacle corresponding to the dense obstacle point to be cleaned, but indicates reaching a pre-configured target position around the actual position corresponding to the dense obstacle point to be cleaned, so that the cleaning robot can clean and traverse a region around the contour of the obstacle corresponding to the dense obstacle point to be cleaned.

Step 34, the second preset navigation path is searched out from all of the navigation paths planned in step 2, where an end point grid position of the second preset navigation path is the dense obstacle point to be cleaned, and the second preset navigation path is different from the first preset navigation path, and then step 35 is executed. The first preset navigation path indicates a traversed navigation path currently; and the second preset navigation path indicates a navigation path to be traversed next time and belongs to a navigation path that has not been traversed. Therefore, from a direction of an overall path, the second preset navigation path is different from the first preset navigation path.

Step 35, the cleaning robot is controlled to be moved along the second preset navigation path searched out in step 34, then step 31 is returned to, so as to replace the first preset navigation path in step 31 with the second preset navigation path searched out in step 34, and step 31-step 34 are repeated until the number of times of executing step 32 is increased from 0 to 3, or whether the cleaning robot is navigated to the actual position corresponding to the dense obstacle point to be cleaned is detected.

Compared with the prior art, in step 31-step 35, in the embodiment, considering a positioning error between a pre-planned navigation path on the grid map and an actual environment, the dense obstacle point to be cleaned is searched for repeatedly along the pre-planned navigation path, and the region around the dense obstacle point to be cleaned is cleaned through at most three searches, so that the dense obstacle point to be cleaned is marked as the obstacle-cleaned state under the condition that the dense obstacle point cannot be reached three consecutive times, so as to adapt to navigation and cleaning in more obstacle distribution scenes.

Based on the embodiment, step 1 specifically includes:

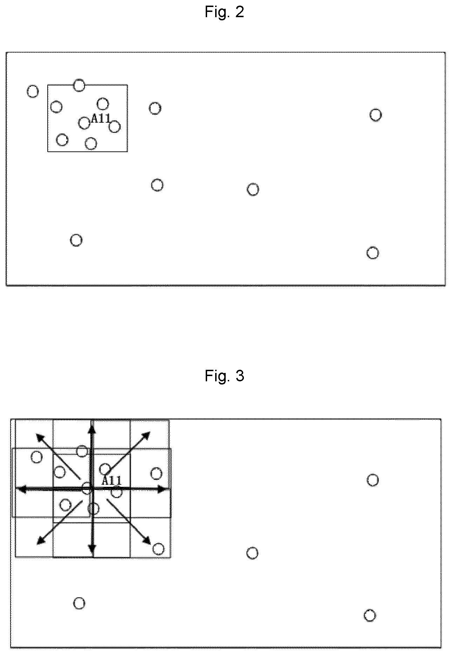

Step 11, the cleaning robot is controlled to conduct cleaning in a region to be cleaned according to a preset planning path in a " 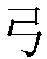 " shape, the cleaning robot is controlled to mark a grid of the obstacle in the grid map created in real time without bypassing the obstacle when the cleaning robot detects the obstacle in a cleaning process, and then step 12 is executed. As shown in Fig. 2, the grids of the obstacles in the region to be cleaned include the grids of the obstacles distributed at intervals; the obstacles distributed at intervals at an upper left portion of a frame in Fig. 2 have small distances and are densely distributed obstacles described in the background art of the disclosure; and the obstacles distributed at intervals at a lower right portion of the frame in Fig. 2 have large distances and are scattered obstacles.

In the embodiment, the grids of the obstacles distributed at intervals are: grids of obstacles except grids of N obstacles distributed continuously in the grids of the obstacles marked in step 11. In the embodiment, the grids of N obstacles distributed continuously are marked as a cleaned and empty state on the grid map, so as to filter out the grids of N obstacles distributed continuously. N is a number of continuously distributed grids set according to a size of a pre-configured grid in the grid map and an actual size of an obstacle marked in the region to be cleaned. Preferably, the grids of N obstacles distributed continuously are used to indicate a wall, so that obstacles having long boundaries such as walls can be filtered out, where N is a preset wall grid number threshold and is used to indicate wall length information. The preset wall grid number threshold is set according to the size of the pre-configured grid in the grid map and the actual size of the obstacle marked in the region to be cleaned. For example, more than 10 continuously distributed obstacle points are indicated as a contour of an obstacle having a long boundary and a large size. Compared with the prior art, in the embodiment, a wall is distinguished from the dense obstacles, the situation that the cleaning robot repeatedly cleans a wall region by regarding the wall region as a dense obstacle region is avoided, and because there is no narrow passable region in the wall region, missing cleaning of the cleaning robot in the wall region is not prone to occurrence in a cleaning process according to the preset planning path in the " 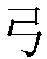 " shape.

In step 11, the method of controlling the cleaning robot to conduct cleaning in the region to be cleaned according to the preset planning path in the " 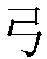 " shape, without bypassing the obstacle when the cleaning robot detects the obstacle in the cleaning process includes:
the cleaning robot is controlled to travel along the preset planning path in the " 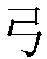 " shape, when the cleaning robot collides with one obstacle on a preset linear path of the preset planning path in the" 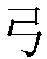 " shape, the body of the cleaning robot is controlled to rotate by a preset angle, then the cleaning robot is controlled to be moved according to an advancing direction after rotation until the cleaning robot generates a moving distance of a preset distance in a direction perpendicular to the preset linear path, so as to move the cleaning robot to an uncleaned linear path having a preset distance from a preset linear path section by adjusting a current advancing direction, so that the region around the contour of the obstacle is not completely cleaned, resulting in missing cleaning. In the embodiment, the uncleaned linear path belongs to the preset planning path in the " 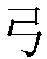 " shape and is parallel to the preset linear path, the preset distance is a preset multiple of a spacing distance between two adjacent parallel linear paths of the preset planning path in the " 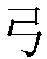 " shape, and the preset multiple is related to a size of the obstacle currently in collision with the cleaning robot. It should be noted that the cleaning robot conducts the cleaning operations in a process of moving from the preset linear path to the uncleaned linear path spaced from the preset linear path by the preset distance, so as to clean an empty region in the region to be cleaned, where there are no densely distributed obstacles in the empty region. The situation that missing cleaning occurs when a dense distribution region of obstacles is cleaned on the basis of not creating and identifying the dense obstacles and cleaning efficiency of the robot is reduced is avoided.

Preferably, in a process of controlling the body of the cleaning robot to rotate by the preset angle, under the condition that the cleaning robot is detected to collide with an obstacle, the cleaning robot is controlled to travel along an edge of the obstacle until reaching the uncleaned linear path that is parallel to the preset linear path and has the preset distance from the preset linear path, so as to keep normal cleaning in a " 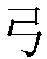 " shape, without completely bypassing the obstacle, so that the region around the contour of the obstacle is not completely cleaned, resulting in missing cleaning. The uncleaned linear path belongs to the preset planning path in a "'7" shape and is parallel to the preset linear path.

Therefore, every time the cleaning robot travels along the preset linear path of the preset planning path in the " 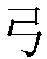 " shape, under a condition that the collision obstacle is detected, the current advancing direction is changed by adjusting a real-time posture of the cleaning robot, so that the cleaning robot traverses a preset distance and is moved to the uncleaned linear path parallel to the preset linear path. The preset distance is a preset multiple of a spacing distance between two adjacent parallel linear paths of the preset planning path in the" 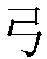 " shape, and the preset multiple is related to the size of the obstacle currently in collision with the cleaning robot. Cleaning planned in the " 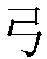 " shape is kept, and the obstacle currently in collision is effectively avoided. Environmental adaptability of the cleaning robot during cleaning work in the " 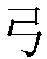 " shape is improved and working efficiency of the cleaning robot is ensured.

Preferably, in a process of controlling the cleaning robot to be moved from a preset starting point position to the preset linear path, that is, before cleaning is started according to the preset planning path in the " 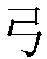 " shape, under a condition that the obstacle collision is detected, the cleaning robot is controlled to search out other uncleaned linear paths of the preset planning path in the "=1" shape, so that the cleaning robot continuously conducts cleaning according to uncleaned paths searched out, so as to avoid the obstacle detected before searching, and the new starting point position of the path in the " 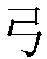 " shape is selected to start to conduct cleaning planned in the " '7" shape, and the preset starting point position is located outside the preset linear path. In the embodiment, before the cleaning robot starts to conduct the cleaning in the " 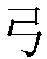 " shape, the obstacle avoiding is completed by searching for an effective preset planning path in the " 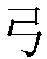 " shape, thereby improving the environmental adaptability of the cleaning robot during the cleaning work and ensuring the working efficiency of the cleaning robot.

Step 12, according to a number of the grids of the obstacles distributed at intervals framed by the sliding rectangular frame in a process that the sliding rectangular frame is moved in the grid map, a dense obstacle standard unit region is set on the grid map, a preset number of positioning rectangular frames having consistent sizes with the sliding rectangular frame are set for taking a center of the dense obstacle standard unit region as a creation starting point, and then the positioning rectangular frames are controlled to be moved, from the creation starting point, in a preset number of traversal directions on the grid map which are symmetrical with respect to the center of the creation starting point respectively; and then step 13 is executed. The sliding rectangular frame is set on the grid map created in real time.

Specifically, in step 12, the method of setting the dense obstacle standard unit region on the grid map includes: the sliding rectangular frame is controlled to move on the grid map. In the embodiment, the sliding rectangular frame is controlled to be moved from left to right by starting from an upper left corner of the grid map, meanwhile, the grids of the obstacles distributed at intervals framed by the sliding rectangular frame on the grid map are marked as an uncleaned state, and the number of the grids of the obstacles distributed at intervals framed by the sliding rectangular frame in real time is recorded in real time; and a rectangular region currently framed by the sliding rectangular frame is set as the dense obstacle standard unit region when the number of the grids of the obstacles distributed at intervals framed by the sliding rectangular frame is larger than or equal to a first density threshold, which is a rectangular frame A11 as shown in Fig. 2. The first density threshold is used to indicate a distribution density of the dense obstacle points in the grid map, and is enough to make gap regions between the obstacles distributed at intervals become cleaning-missed regions of the cleaning robot in a normal planned cleaning mode in the " 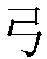 " shape or cleaning-missed regions under the condition of positioning errors of the map. The technical solution also reflects narrowness of gaps among the grids of the obstacles.

Step 13, each of the positioning rectangular frames is controlled to continuously move in the traversal direction correspondingly or not continuously move in the traversal direction correspondingly according to a relation between a ratio of an area of a new region framed by each of the positioning rectangular frames after movement relative to that before movement to an area of a region framed by the positioning rectangular frame correspondingly before movement and a change of the number of the grids of the obstacles distributed at intervals framed by the positioning rectangular frame which is same before and after movement, and the grids of the obstacles distributed at intervals framed by each of the positioning rectangular frames are marked as the dense obstacle points, and each of the positioning rectangular frames is configured to be moved once in the traversal direction correspondingly according to a unit traversal distance.

Specifically, in step 13,controlling each of the positioning rectangular frames to continuously move in the traversal direction correspondingly or not continuously move in the traversal direction correspondingly according to the relation between the ratio of the area of the new region framed by each of the positioning rectangular frames after movement relative to that before movement to the area of the region framed by the positioning rectangular frame correspondingly before movement and the change of the number of the grids of the obstacles distributed at intervals framed by the positioning rectangular frame which is same before and after movement includes: every time one of the positioning rectangular frames is moved once in the traversal direction correspondingly by the unit traversal distance, whether a ratio of the number of the grids of the obstacles distributed at intervals framed by the positioning rectangular frame after movement to the number of the grids of the obstacles distributed at intervals framed by the positioning rectangular frame before movement is larger than or equal to an area ratio of a region, which does not overlap the positioning rectangular frame before movement, in the positioning rectangular frame after movement is judged, if so, the positioning rectangular frame is controlled to continuously move in a same traversal direction by the unit traversal distance, and if not so, the positioning rectangular frame is controlled to stop moving, and the area ratio of the region, which does not overlap the positioning rectangular frame before movement, in the positioning rectangular frame after movement is a ratio of the area of the new region framed by the positioning rectangular frame after movement relative to that before movement to the area of the region framed by the same positioning rectangular frame before movement.

On the basis of establishing the dense obstacle standard unit region in the above embodiment, each of the positioning rectangular frames is controlled to be moved in the traversal direction correspondingly by the unit traversal distance, a distribution density of the grids of the obstacles is detected, and the number of grids framed by a fixed rectangular frame is used as feedback information of a density of obstacles in a unit area, so that a rational creation range of the dense obstacle region is determined, and the method has high efficiency, effectiveness and adaptability in region creation in a complex obstacle narrow environment.

Compared with the prior art, in step 11-step 13, on the basis that obstacle position information is known and a local region is actually cleaned, the rectangular frame is controlled to be moved in a specific traversal direction on the grid map by taking a creation center as a starting point, and grid information of obstacles satisfying a dense distribution requirement is acquired according to a corresponding relation between a change of the number of the grids of an obstacle framed by the rectangular frame before and after movement and an area of a newly covering region (that is, there are a corresponding number of grids of a corresponding number of obstacles satisfying the dense distribution requirement in a unit grid region), so that subsequent missing cleaning of the cleaning robot in the narrow passable regions among chair feet and table feet in the region to be cleaned is avoided. In addition, on the premise of ensuring precision of grid map information, the embodiment reduces a running memory space occupied by the sliding rectangular frame in the grid map, and saves computing resources compared with using a laser sensor to directly scan and mark dense obstacle points in the map, so as to be suitable for more positioning and navigation scenes.

After step 13 is conducted, the method further includes: step 14, when the preset number of positioning rectangular frames are determined to stop moving, that is, a ratio of the number of the grids of the obstacles distributed at intervals framed by the preset number of positioning rectangular frames after a corresponding movement to the number of the grids of the obstacles distributed at intervals framed by the positioning rectangular frames before the corresponding movement is less than a ratio of the area of the new region covered by the same positioning rectangular frame after the corresponding movement to the area of the region framed by the same positioning rectangular frame before the corresponding movement, the grids corresponding to all marked dense obstacle points are combined to create the dense obstacle region. In the step, grid position information of obstacles, which can form the dense obstacle region, distributed at intervals is acquired, so that the cleaning robot can acquire the dense obstacle region formed by marks on the grid map.

As an embodiment, as shown in Fig. 3, the positioning rectangular frames can be set as square frames, and the preset number is 8. Preferably, a side length of the square frame in an actual region to be cleaned is 2 m. Therefore, in the embodiment, the traversal directions that are symmetrical about the center of the creation starting point respectively, as shown in Fig. 3, include: a rightward direction of a horizontal side length of a square frame configured as the dense obstacle standard unit region A11, a leftward direction of the horizontal side length of the square frame configured as the dense obstacle standard unit region A11, an upward direction of a longitudinal side length of the square frame configured as the dense obstacle standard unit region A11, a downward direction of the longitudinal side length of the square frame configured as the dense obstacle standard unit region A11, an upper left direction of a diagonal of the square frame configured as the dense obstacle standard unit region A11, a lower left direction of the diagonal of the square frame configured as the dense obstacle standard unit region A11, an upper right direction of the diagonal of the square frame configured as the dense obstacle standard unit region A11, and a lower right direction of the diagonal of the square frame configured as the dense obstacle standard unit region A11. Then, a diagonal intersection point of the square frame set as the dense obstacle standard unit region A11 is taken as a center and also as the creation starting point, a preset number of traversal directions are symmetrical about the center of the creation starting point, and the unit traversal distance is set to change with change of the traversal directions, so as to reduce computation complexity of an area and a ratio in step 13.

When the traversal directions actually used are the rightward direction of the horizontal side length of the square frame A11, the leftward direction of the horizontal side length of the square frame A11, the upward direction of the longitudinal side length of the square frame A11 and the downward direction of the longitudinal side length of the square frame A11, the unit traversal distance having a value that is half the side length of the square frame A11 is selected, 4 positioning rectangular frames consistent with the square frame A11 in size are set, the 4 positioning rectangular frames are controlled to be moved by a distance half the side length of the square frame A11 in the four traversal directions of the leftward direction of the horizontal side length, the rightward direction of the horizontal side length, the upward direction of the longitudinal side length and the downward direction of the longitudinal side length of the square frame A11 respectively, and after the 4 positioning rectangular frames are moved by the distance half the side length of the square frame A11, a newly covering region of each of the positioning rectangular frames accounts for half of a region covered by the square frame A11. In this case, under the condition that the number of the grids of the obstacles framed by the positioning rectangular frame is larger than or equal to half of the number of the grids of the obstacles framed by the square frame A11, the positioning rectangular frame is controlled to continuously be moved in the traversal direction correspondingly by the distance half the side length of the square frame A11, which indicates that the grids of the obstacles in the region currently framed by the positioning rectangular frame meet a distribution feature requirement of the dense obstacle points; and under the condition that the number of the grids of the obstacles framed by the positioning rectangular frame is less than half of the number of grids of obstacles framed by the square frame A11, the positioning rectangular frame is controlled to stop moving, which indicates that there are too few scattered grids of obstacles in the region currently framed by the positioning rectangular frame. It should be noted that the grids, for determining the number of the grids, of the obstacles in the embodiment are only the grids of the obstacles distributed at intervals.

When the traversal directions actually used are the upper left direction of the diagonal of the square frame A11, the lower left direction of the diagonal of the square frame A11, the upper right direction of the diagonal of the square frame A11, and the lower right direction of the diagonal of the square frame A11, the unit traversal distance having a value that is half the diagonal of the square frame A11 is selected, 4 positioning rectangular frames consistent with the square frame A11 in size are additionally set, the 4 positioning rectangular frames are controlled to be moved by a distance half the diagonal of the square frame A11 in the four traversal directions of the upper left direction of the diagonal, the lower left direction of the diagonal, the upper right direction of the diagonal, and the lower right direction of the diagonal of the square frame A11 respectively, and after the 4 positioning rectangular frames are moved, a newly covering region of each of the positioning rectangular frames accounts for three quarters of the region covered by the square frame A11. In this case, under the condition that the number of the grids of the obstacles framed by the positioning rectangular frame is larger than or equal to three quarters of the number of the grids of the obstacles framed by the square frame A11, the positioning rectangular frame is controlled to continuously be moved in the traversal direction correspondingly by the distance half the diagonal of the square frame A11; and under the condition that the number of the grids of the obstacles framed by the positioning rectangular frame is less than three quarters of the number of the grids of the obstacles framed by the square frame A11, the positioning rectangular frame is controlled to stop moving. It should be noted that grids, for determining the number of the grids, of the obstacles in the embodiment are only the grids of the obstacles distributed at intervals.

In conclusion, in the embodiment, computation complexity of moving paths of the positioning rectangular frames in the grid map and the number of the grids of the obstacles distributed at intervals framed in real time is reduced, and moving time of the positioning rectangular frames in 8 traversal directions is shortened.

Then, when all of the positioning rectangular frames are determined to stop moving, the grids of the obstacles framed during movement around with the creation starting point of the square frame A11 as the starting point are marked as the dense obstacle points, and the marked dense obstacle points form the dense obstacle region.

## Claims

1. A method for controlling cleaning based on dense obstacles, wherein the method comprises: step 1, marking dense obstacle points according to a number feature of grids of obstacles framed by a sliding rectangular frame which is preset in a grid map, and then proceeding to step 2; the step 2, planning, according to the dense obstacle points marked in the grid map, navigation paths of which an end point position is corresponding to one dense obstacle point and which does not pass grids of other obstacles, and then proceeding to step 3; and the step 3, controlling, according to an obstacle collision detected by the cleaning robot, the cleaning robot to complete traveling a circle around an obstacle currently in collision in a process of navigating the cleaning robot to an actual position corresponding to each of the dense obstacle points according to the navigation paths planned in the step 2, and marking a cleaning state of a grid corresponding to the obstacle currently in collision, wherein the cleaning robot keeps conducting cleaning operations while traveling around the obstacle currently in collision;
**characterized in that**
in the step 3, controlling, according to the obstacle collision detected by the cleaning robot, the cleaning robot to complete traveling the circle around the obstacle currently in collision in the process of navigating the cleaning robot to the actual position corresponding to each of the dense obstacle points according to the navigation paths planned in the step 2, and marking the cleaning state of the grid corresponding to the obstacle currently in collision comprises: controlling, before the cleaning robot is navigated to the actual position corresponding to the dense obstacle point to be cleaned according to the navigation paths planned in the step 2, the cleaning robot to travel the circle around the obstacle currently in collision under a condition that the obstacle collision is detected, and marking, after the cleaning robot completes traveling the circle around the obstacle currently in collision, the obstacle as an obstacle-cleaned state; and controlling, when the cleaning robot is navigated to the actual position corresponding to the dense obstacle point to be cleaned, the cleaning robot to travel a circle around an obstacle at the dense obstacle point to be cleaned under a condition that a collision with the obstacle at the dense obstacle point to be cleaned is detected, and marking, after the cleaning robot completes traveling a circle around the obstacle at the dense obstacle point to be cleaned, the dense obstacle point to be cleaned as the obstacle-cleaned state, wherein the dense obstacle point to be cleaned is a pre-configured dense obstacle point for cleaning;
wherein the step 3 further comprises: marking, after the cleaning robot is navigated to the actual position corresponding to the dense obstacle point to be cleaned, the dense obstacle point to be cleaned as an area-cleaned state under a condition that the cleaning robot is detected to directly pass the actual position corresponding to the dense obstacle point to be cleaned, wherein the dense obstacle point to be cleaned is a pre-selected target obstacle to be cleaned.

2. The method for controlling cleaning according to claim 1, wherein the method for controlling cleaning further comprising: step 4, controlling, after the cleaning robot is navigated to traverse all of the dense obstacle points which are marked according to the navigation paths planned in the step 2, the cleaning robot to be navigated to an uncleaned region, then returning to the step 1 to mark new dense obstacle points, and repeating previous steps until the cleaning robot traverses all regions corresponding to the grid map.

3. The method for controlling cleaning according to claim 1, wherein when all the dense obstacle points marked in the step 1 are marked as the obstacle-cleaned state or area-cleaned state correspondingly, the step 4 is executed.

4. The method for controlling cleaning according to claim 2, wherein the step 3 further comprises: step 31, controlling, before the cleaning robot is navigated to the actual position corresponding to the dense obstacle point to be cleaned according to a first preset navigation path, the cleaning robot to travel a circle around an obstacle under a condition that a collision with the obstacle is detected, simultaneously keeping detecting whether the cleaning robot is navigated to the actual position corresponding to the dense obstacle point to be cleaned, and then proceeding to step 32; the step 32, proceeding to step 33 under a condition that the cleaning robot is detected not to be navigated to the actual position corresponding to the dense obstacle point to be cleaned when the cleaning robot completes traveling the circle around the obstacle which is same; the step 33, determining whether a number of times of executing the step 32 reaches 3, if the number of times of executing the step 32 reaches 3, marking the dense obstacle point to be cleaned as the obstacle-cleaned state, and if the number of times of executing the step 32 does not reach 3, proceeding to step 34; the step 34, searching out a second preset navigation path from all of the navigation paths planned in the step 2, wherein an end point grid position of the second preset navigation path is the dense obstacle point to be cleaned, and the second preset navigation path is different from the first preset navigation path, and then proceeding to step 35; and the step 35, controlling the cleaning robot to move along the second preset navigation path searched out in the step 34, and repeating the step 31 to the step 34 until the cleaning robot is detected to be navigated to the actual position corresponding to the dense obstacle point to be cleaned or the number of times of executing the step 32 is determined to reach 3, wherein after returning from the step 35 to the step 31, the first preset navigation path in the step 31 is replaced with the second preset navigation path in the step 34, and the navigation paths planned in the step 2 comprise the first preset navigation path and the second preset navigation path.

5. The method for controlling cleaning according to claim 4, wherein detecting whether the cleaning robot is navigated to the actual position corresponding to the dense obstacle point to be cleaned comprises: determining that the cleaning robot is navigated to the actual position corresponding to the dense obstacle point to be cleaned under a condition that a distance between a current position of the cleaning robot and the actual position corresponding to the dense obstacle point to be cleaned is less than a quarter of a diameter of a body of the cleaning robot, and determining that the cleaning robot is not navigated to the actual position corresponding to the dense obstacle point to be cleaned under the condition that the distance between the current position of the cleaning robot and the actual position corresponding to the dense obstacle point to be cleaned is not less than the quarter of the diameter of the body of the cleaning robot.

6. The method for controlling cleaning according to any one of claims 1-5, wherein judging whether the cleaning robot completes traveling the circle around the obstacle currently in collision comprises: acquiring a collision position of the cleaning robot and the obstacle before controlling the cleaning robot to travel the circle around the obstacle; and then controlling the cleaning robot to start to travel around the obstacle from the collision position, determining whether a rotation angle of the cleaning robot is larger than or equal to 360 degrees and whether a distance between a current position of the cleaning robot and the collision position is less than a quarter of a diameter of a body of the cleaning robot, if the rotation angle of the cleaning robot is larger than or equal to 360 degrees and the distance between the current position of the cleaning robot and the collision position is less than the quarter of the diameter of the body of the cleaning robot, determining that the cleaning robot completes traveling the circle around the obstacle currently in collision, and if the rotation angle of the cleaning robot is not larger than or equal to 360 degrees, or the distance between the current position of the cleaning robot and the collision position is not less than the quarter of the diameter of the body of the cleaning robot, determining that the cleaning robot does not complete traveling the circle around the obstacle currently in collision.

7. The method for controlling cleaning according to any one of claims 1-5, wherein judging whether the cleaning robot completes traveling the circle around the obstacle currently in collision comprises: acquiring a collision position of the cleaning robot and the obstacle before controlling the cleaning robot to travel the circle around the obstacle; and then controlling the cleaning robot to start to travel around the obstacle from the collision position, determining whether a rotation angle of the cleaning robot is larger than or equal to 400 degrees, if the rotation angle of the cleaning robot is larger than or equal to 400 degrees, determining that the cleaning robot completes traveling the circle around the obstacle currently in collision, and if the rotation angle of the cleaning robot is not larger than or equal to 400 degrees, determining that the cleaning robot does not complete traveling the circle around the obstacle currently in collision.

8. The method for controlling cleaning according to claim 1, wherein the step 1 specifically comprises:
step 11, controlling the cleaning robot to conduct cleaning in a region to be cleaned according to a preset planning path in a "'7" shape, and controlling the cleaning robot to mark the grid of the obstacle in the grid map created in real time without bypassing the obstacle when the cleaning robot detects the obstacle in a cleaning process, wherein the grids of the obstacles comprise grids of obstacles distributed at intervals;
step 12, setting, according to a number of the grids of the obstacles distributed at intervals framed by the sliding rectangular frame in a process that the sliding rectangular frame is moved in the grid map, a dense obstacle standard unit region on the grid map, and then setting a preset number of positioning rectangular frames having consistent sizes with the sliding rectangular frame for taking a center of the dense obstacle standard unit region as a creation starting point, and then controlling the positioning rectangular frames to move, from the creation starting point, in a preset number of traversal directions on the grid map which are symmetrical about the center of the creation starting point respectively;
and step 13, controlling each of the positioning rectangular frames to continuously move in the traversal direction correspondingly or not continuously move in the traversal direction correspondingly according to a relation between a ratio of an area of a new region framed by each of the positioning rectangular frames after movement relative to that before movement to an area of a region framed by the positioning rectangular frame correspondingly before movement and a change of the number of the grids of the obstacles distributed at intervals framed by the positioning rectangular frame which is same before and after movement, and marking the grids of the obstacles distributed at intervals framed by each of the positioning rectangular frames as the dense obstacle points, wherein each of the positioning rectangular frames is configured to be moved once in the traversal direction correspondingly according to a unit traversal distance.

9. The method for controlling cleaning according to claim 8, wherein the step 1 further comprises: step 14, combining, when the preset number of positioning rectangular frames stop moving, the grids corresponding to all of the dense obstacle points which are marked to create a dense obstacle region.

10. The method for controlling cleaning according to claim 9, wherein the grids of the obstacles distributed at intervals are grids of obstacles except grids of N obstacles distributed continuously in the grids of the obstacles marked in the step 11, wherein N is a number of continuously distributed grids set according to a pre-configured grid size in the grid map and an actual size of the obstacle marked in the region to be cleaned,
wherein in the step 11, controlling the cleaning robot to conduct cleaning in the region to be cleaned according to the preset planning path in the " 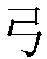 " shape without bypassing the obstacle when the cleaning robot detects the obstacle in the cleaning process comprises: controlling the cleaning robot to travel along the preset planning path in the " 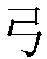 " shape, and controlling, when the cleaning robot collides with one obstacle on a preset linear path of the preset planning path in the " 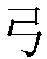 " shape, a body of the cleaning robot to rotate by a preset angle, so as to move the cleaning robot to an uncleaned linear path having a preset distance from a preset linear path section by adjusting a current advancing direction,
wherein the uncleaned linear path belongs to the preset planning path in the " 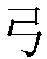 " shape and is parallel to the preset linear path, the preset distance is a preset multiple of a spacing distance between two adjacent parallel linear paths of the preset planning path in the " 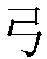 " shape, the preset multiple is related to a size of the obstacle currently in collision with the cleaning robot,
wherein the cleaning robot conducts cleaning operations in a process of moving from the preset linear path to the uncleaned linear path spaced from the preset linear path by the preset distance,
wherein in a process of controlling the body of the cleaning robot to rotate by the preset angle, under a condition that the cleaning robot is detected to collide with one obstacle, the cleaning robot is controlled to travel along an edge of the obstacle until reaching the uncleaned linear path having the preset distance from the preset linear path, so as to keep cleaning planned in the" 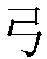 " shape, without completely bypassing the obstacle,
wherein in a process of controlling the cleaning robot to move from a preset starting point position to the preset linear path, under a condition that the obstacle collision is detected, the cleaning robot is controlled to search out other uncleaned linear paths of the preset planning path in the " 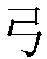 " shape, so that the cleaning robot continuously conducts cleaning according to uncleaned paths searched out, so as to avoid the obstacle detected before searching, wherein the preset starting point position is located outside the preset linear path.

11. The method for controlling cleaning according to claim 10, wherein in the step 12, setting the dense obstacle standard unit region on the grid map comprises: controlling the sliding rectangular frame to move on the grid map, marking the grids of the obstacles distributed at intervals framed by the sliding rectangular frame on the grid map as an uncleaned state, and recording the number of the grids of the obstacles framed and distributed at intervals in real time; and setting a rectangular region currently framed by the sliding rectangular frame as the dense obstacle standard unit region when the number of the grids of the obstacles distributed at intervals framed by the sliding rectangular frame is larger than or equal to a first density threshold, wherein the first density threshold is used to indicate a distribution density of the dense obstacle points in the grid map and is enough to make gap regions between the obstacles distributed at intervals become cleaning-missed regions of the cleaning robot.

12. The method for controlling cleaning according to claim 11, wherein in the step 13, controlling each of the positioning rectangular frames to continuously move in the traversal direction correspondingly or not continuously move in the traversal direction correspondingly according to the relation between the ratio of the area of the new region framed by each of the positioning rectangular frames after movement relative to that before movement to the area of the region framed by the positioning rectangular frame correspondingly before movement and the change of the number of the grids of the obstacles distributed at intervals framed by the positioning rectangular frame which is same before and after movement comprises:
judging, every time one of the positioning rectangular frames is moved once in the traversal direction correspondingly by the unit traversal distance, whether a ratio of the number of the grids of the obstacles distributed at intervals framed by the positioning rectangular frame after movement to the number of the grids of the obstacles distributed at intervals framed by the positioning rectangular frame before movement is larger than or equal to an area ratio of a region, which does not overlap the positioning rectangular frame before movement, in the positioning rectangular frame after movement, if the ratio of the number of the grids of the obstacles distributed at intervals framed by the positioning rectangular frame after movement to the number of the grids of the obstacles distributed at intervals framed by the positioning rectangular frame before movement is larger than or equal to the area ratio of the region, controlling the positioning rectangular frame to continuously to move in a same traversal direction by the unit traversal distance, and if the ratio of the number of the grids of the obstacles distributed at intervals framed by the positioning rectangular frame after movement to the number of the grids of the obstacles distributed at intervals framed by the positioning rectangular frame before movement is not larger than or equal to the area ratio of the region, controlling the positioning rectangular frame to stop moving,
wherein the area ratio of the region, which does not overlap the positioning rectangular frame before movement, in the positioning rectangular frame after movement is a ratio of the area of the new region framed by the positioning rectangular frame after movement relative to that before movement to the area of the region framed by the positioning rectangular frame which is same before movement.

13. The method for controlling cleaning according to any one of claims 10-12, wherein the positioning rectangular frames are square frames, and the preset number is 8; and the traversal directions which are symmetrical about the center of the creation starting point respectively comprise: a rightward direction of a horizontal side length of a square frame configured as the dense obstacle standard unit region, a leftward direction of the horizontal side length of the square frame configured as the dense obstacle standard unit region, an upward direction of a longitudinal side length of the square frame configured as the dense obstacle standard unit region, a downward direction of the longitudinal side length of the square frame configured as the dense obstacle standard unit region, an upper left direction of a diagonal of the square frame configured as the dense obstacle standard unit region, a lower left direction of the diagonal of the square frame configured as the dense obstacle standard unit region, an upper right direction of the diagonal of the square frame configured as the dense obstacle standard unit region, and a lower right direction of the diagonal of the square frame configured as the dense obstacle standard unit region.

## Patentansprüche

1. Verfahren zum Steuern von Reinigung basierend auf dichten Hindernissen, wobei das Verfahren Folgendes umfasst: Schritt 1, Markieren von dichten Hindernispunkten gemäß einem Zahlenmerkmal von Rastern von Hindernissen, die durch einen rechteckigen Gleitrahmen eingerahmt sind, der in einer Rasterkarte voreingestellt ist, und dann Übergehen zu Schritt 2; den Schritt 2, Planen von Navigationspfaden gemäß den in der Rasterkarte markierten dichten Hindernispunkten, von denen eine Endpunktposition einem dichten Hindernispunkt entspricht und die nicht an Rastern anderer Hindernisse vorbeiführen, und dann Übergehen zu Schritt 3; und den Schritt 3, Steuern des Reinigungsroboters gemäß einer durch den Reinigungsroboter detektierten Hinderniskollision, damit er eine Fahrt in einem Kreis um ein aktuell kollidierendes Hindernis in einem Prozess eines Navigierens des Reinigungsroboters zu einer tatsächlichen Position, die jedem der dichten Hindernispunkte entspricht, gemäß den in dem Schritt 2 geplanten Navigationspfaden abschließt, und Markieren eines Reinigungszustands eines Rasters, der dem aktuell kollidierenden Hindernis entspricht, wobei der Reinigungsroboter weiterhin Reinigungsvorgänge vornimmt, während er um das aktuell kollidierende Hindernis herumfährt;
**dadurch gekennzeichnet, dass**
in dem Schritt 3 das Steuern des Reinigungsroboters gemäß der durch den Reinigungsroboter detektierten Hinderniskollision, damit er die Fahrt in dem Kreis um das aktuell kollidierende Hindernis in dem Prozess des Navigierens des Reinigungsroboters zu der tatsächlichen Position, die jedem der dichten Hindernispunkte entspricht, gemäß den in dem Schritt 2 geplanten Navigationspfaden abschließt, und das Markieren des Reinigungszustands des Rasters, der dem aktuell kollidierenden Hindernis entspricht, Folgendes umfassen: Steuern des Reinigungsroboters, bevor der Reinigungsroboter gemäß den in dem Schritt 2 geplanten Navigationspfaden zu der tatsächlichen Position navigiert wird, die dem zu reinigenden dichten Hindernispunkt entspricht, damit er den Kreis um das aktuell kollidierende Hindernis fährt, unter einer Bedingung, dass die Hinderniskollision detektiert wird, und Markieren des Hindernisses als Hindernis-gereinigt-Zustand, nachdem der Reinigungsroboter die Fahrt in dem Kreis um das aktuell kollidierende Hindernis abschließt, und Steuern des Reinigungsroboters, wenn der Reinigungsroboter zu der tatsächlichen Position navigiert ist, die dem zu reinigenden dichten Hindernispunkt entspricht, damit er in einem Kreis um ein Hindernis an dem zu reinigenden dichten Hindernispunkt fährt, unter einer Bedingung, dass eine Kollision mit dem Hindernis an dem zu reinigenden dichten Hindernispunkt detektiert wird, und Markieren des zu reinigenden dichten Hindernispunkts als der Hindernis-gereinigt-Zustand, nachdem der Reinigungsroboter eine Fahrt in einem Kreis um das Hindernis an dem zu reinigenden dichten Hindernispunkt abschließt, wobei der zu reinigende dichte Hindernispunkt ein vorkonfigurierter dichter Hindernispunkt zur Reinigung ist,
wobei der Schritt 3 ferner Folgendes umfasst: Markieren des zu reinigenden dichten Hindernispunkts als Fläche-gereinigt-Zustand, nachdem der Reinigungsroboter zu der tatsächlichen Position navigiert ist, die dem zu reinigenden dichten Hindernispunkt entspricht, unter einer Bedingung, dass detektiert wird, dass der Reinigungsroboter direkt an der tatsächlichen Position vorbeifährt, die dem zu reinigenden dichten Hindernispunkt entspricht, wobei der zu reinigende dichte Hindernispunkt ein vorausgewähltes zu reinigendes Zielhindernis ist.

2. Verfahren zum Steuern von Reinigung gemäß Anspruch 1, wobei das Verfahren zum Steuern von Reinigung ferner Folgendes umfasst: Schritt 4, Steuern des Reinigungsroboters, nachdem der Reinigungsroboter gemäß den in dem Schritt 2 geplanten Navigationspfaden navigiert ist, sodass er alle dichten Hindernispunkte abfährt, die markiert sind, damit er zu einer ungereinigten Region navigiert wird, dann Zurückkehren zu dem Schritt 1, um neue dichte Hindernispunkte zu markieren, und Wiederholen vorheriger Schritte, bis der Reinigungsroboter alle Regionen abfährt, die der Rasterkarte entsprechen.

3. Verfahren zum Steuern von Reinigung gemäß Anspruch 1, wobei, wenn alle in dem Schritt 1 markierten dichten Hindernispunkte entsprechend als der Hindernis-gereinigt-Zustand oder Fläche-gereinigt-Zustand markiert sind, der Schritt 4 ausgeführt wird.

4. Verfahren zum Steuern von Reinigung gemäß Anspruch 2, wobei der Schritt 3 ferner Folgendes umfasst: Schritt 31, Steuern des Reinigungsroboters, bevor der Reinigungsroboter gemäß einem ersten voreingestellten Navigationspfad zu der tatsächlichen Position navigiert wird, die dem zu reinigenden dichten Hindernispunkt entspricht, damit er in einem Kreis um ein Hindernis fährt, unter einer Bedingung, dass eine Kollision mit dem Hindernis detektiert wird, gleichzeitig weiterhin Detektieren, ob der Reinigungsroboter zu der tatsächlichen Position navigiert ist, die dem zu reinigenden dichten Hindernispunkt entspricht, und dann Übergehen zu Schritt 32; den Schritt 32, Übergehen zu Schritt 33 unter einer Bedingung, dass detektiert wird, dass der Reinigungsroboter nicht zu der tatsächlichen Position navigiert ist, die dem zu reinigenden dichten Hindernispunkt entspricht, wenn der Reinigungsroboter die Fahrt in dem Kreis um das Hindernis abschließt, die gleich ist; den Schritt 33, Bestimmen, ob eine Anzahl von Malen des Ausführens des Schritts 32 3 erreicht, falls die Anzahl von Malen des Ausführens des Schritts 32 3 erreicht, Markieren des zu reinigenden dichten Hindernispunkts als der Hindernis-gereinigt-Zustand, und falls die Anzahl von Malen des Ausführens des Schritts 32 nicht 3 erreicht, Übergehen zu Schritt 34; den Schritt 34, Heraussuchen eines zweiten voreingestellten Navigationspfads aus allen in dem Schritt 2 geplanten Navigationspfaden, wobei eine Endpunkt-Rasterposition des zweiten voreingestellten Navigationspfads der zu reinigende dichte Hindernispunkt ist und sich der zweite voreingestellte Navigationspfad von dem ersten voreingestellten Navigationspfad unterscheidet, und dann Übergehen zu Schritt 35; und den Schritt 35, Steuern des Reinigungsroboters, damit er sich entlang des in dem Schritt 34 herausgesuchten zweiten voreingestellten Navigationspfads bewegt, und Wiederholen des Schritts 31 bis zu dem Schritt 34, bis detektiert wird, dass der Reinigungsroboter zu der tatsächlichen Position navigiert ist, die dem zu reinigenden dichten Hindernispunkt entspricht, oder bestimmt wird, dass die Anzahl von Malen des Ausführens des Schritts 32 3 erreicht, wobei nach dem Zurückkehren von dem Schritt 35 zu dem Schritt 31 der erste voreingestellte Navigationspfad in dem Schritt 31 durch den zweiten voreingestellten Navigationspfad in dem Schritt 34 ersetzt wird und die in dem Schritt 2 geplanten Navigationspfade den ersten voreingestellten Navigationspfad und den zweiten voreingestellten Navigationspfad umfassen.

5. Verfahren zum Steuern von Reinigung gemäß Anspruch 4, wobei das Detektieren, ob der Reinigungsroboter zu der tatsächlichen Position navigiert ist, die dem zu reinigenden dichten Hindernispunkt entspricht, Folgendes umfasst: Bestimmen, dass der Reinigungsroboter zu der tatsächlichen Position navigiert ist, die dem zu reinigenden dichten Hindernispunkt entspricht, unter einer Bedingung, dass eine Distanz zwischen einer aktuellen Position des Reinigungsroboters und der tatsächlichen Position, die dem zu reinigenden dichten Hindernispunkt entspricht, weniger als ein Viertel eines Durchmessers eines Körpers des Reinigungsroboters beträgt, und Bestimmen, dass der Reinigungsroboter nicht zu der tatsächlichen Position navigiert ist, die dem zu reinigenden dichten Hindernispunkt entspricht, unter der Bedingung, dass die Distanz zwischen der aktuellen Position des Reinigungsroboters und der tatsächlichen Position, die dem zu reinigenden dichten Hindernispunkt entspricht, nicht weniger als das Viertel des Durchmessers des Körpers des Reinigungsroboters beträgt.

6. Verfahren zum Steuern von Reinigung gemäß einem der Ansprüche 1-5, wobei Beurteilen, ob der Reinigungsroboter die Fahrt in dem Kreis um das aktuell kollidierende Hindernis abschließt, Folgendes umfasst: Erfassen einer Kollisionsposition des Reinigungsroboters und des Hindernisses vor dem Steuern des Reinigungsroboters, damit er den Kreis um das Hindernis fährt, und dann Steuern des Reinigungsroboters, damit er damit startet, von der Kollisionsposition aus um das Hindernis zu fahren, Bestimmen, ob ein Drehwinkel des Reinigungsroboters größer oder gleich 360 Grad ist und ob eine Distanz zwischen einer aktuellen Position des Reinigungsroboters und der Kollisionsposition weniger als ein Viertel eines Durchmessers eines Körpers des Reinigungsroboters beträgt, falls der Drehwinkel des Reinigungsroboters größer oder gleich 360 Grad ist und die Distanz zwischen der aktuellen Position des Reinigungsroboters und der Kollisionsposition weniger als das Viertel des Durchmessers des Körpers des Reinigungsroboters beträgt, Bestimmen, dass der Reinigungsroboter die Fahrt in dem Kreis um das aktuell kollidierende Hindernis abschließt, und falls der Drehwinkel des Reinigungsroboters nicht größer oder gleich 360 Grad ist oder die Distanz zwischen der aktuellen Position des Reinigungsroboters und der Kollisionsposition nicht weniger als das Viertel des Durchmessers des Körpers des Reinigungsroboters beträgt, Bestimmen, dass der Reinigungsroboter die Fahrt in dem Kreis um das aktuell kollidierende Hindernis nicht abschließt.

7. Verfahren zum Steuern von Reinigung gemäß einem der Ansprüche 1-5, wobei Beurteilen, ob der Reinigungsroboter die Fahrt in dem Kreis um das aktuell kollidierende Hindernis abschließt, Folgendes umfasst: Erfassen einer Kollisionsposition des Reinigungsroboters und des Hindernisses vor dem Steuern des Reinigungsroboters, damit er den Kreis um das Hindernis fährt, und dann Steuern des Reinigungsroboters, damit er damit startet, von der Kollisionsposition aus um das Hindernis zu fahren, Bestimmen, ob ein Drehwinkel des Reinigungsroboters größer oder gleich 400 Grad ist, falls der Drehwinkel des Reinigungsroboters größer oder gleich 400 Grad ist, Bestimmen, dass der Reinigungsroboter die Fahrt in dem Kreis um das aktuell kollidierende Hindernis abschließt, und falls der Drehwinkel des Reinigungsroboters nicht größer oder gleich 400 Grad ist, Bestimmen, dass der Reinigungsroboter die Fahrt in dem Kreis um das aktuell kollidierende Hindernis nicht abschließt.

8. Verfahren zum Steuern von Reinigung gemäß Anspruch 1, wobei der Schritt 1 insbesondere Folgendes umfasst:
Schritt 11, Steuern des Reinigungsroboters, damit er eine Reinigung in einer zu reinigenden Region gemäß einem voreingestellten Planungspfad in einer " 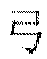 "-Form vornimmt, und Steuern des Reinigungsroboters, damit er das Raster des Hindernisses in der in Echtzeit erstellten Rasterkarte markiert, ohne das Hindernis zu umgehen, wenn der Reinigungsroboter das Hindernis in einem Reinigungsprozess detektiert, wobei die Raster der Hindernisse in Intervallen verteilte Raster von Hindernissen umfassen;
Schritt 12, Einstellen einer Standardeinheitsregion dichter Hindernisse auf der Rasterkarte gemäß einer Anzahl der Raster der in Intervallen verteilten Hindernisse, die durch den rechteckigen Gleitrahmen in einem Prozess eingerahmt sind, bei dem der rechteckige Gleitrahmen in der Rasterkarte bewegt wird, und dann Einstellen einer voreingestellten Anzahl von rechteckigen Positionierungsrahmen mit beständigen Größen mit dem rechteckigen Gleitrahmen, um einen Mittelpunkt der Standardeinheitsregion dichter Hindernisse als Erstellungsstartpunkt zu nehmen, und dann Steuern der rechteckigen Positionierungsrahmen, damit sie sich von dem Erstellungsstartpunkt aus in einer voreingestellten Anzahl von Abfahrrichtungen auf der Rasterkarte bewegen, die jeweils symmetrisch um den Mittelpunkt des Erstellungsstartpunkts sind,
und Schritt 13, Steuern jedes der rechteckigen Positionierungsrahmen, damit sie sich entsprechend kontinuierlich in der Abfahrrichtung bewegen oder sich entsprechend nicht kontinuierlich in der Abfahrrichtung bewegen, gemäß einer Beziehung zwischen einem Verhältnis einer Fläche einer neuen Region, die durch jeden der rechteckigen Positionierungsrahmen nach der Bewegung relativ zu der vor einer Bewegung eingerahmt ist, zu einer Fläche einer Region, die durch den rechteckigen Positionierungsrahmen entsprechend vor der Bewegung eingerahmt ist, und einer Änderung der Anzahl der Raster der in Intervallen verteilten Hindernisse, die durch den rechteckigen Positionierungsrahmen eingerahmt sind, die vor und nach der Bewegung gleich ist, und Markieren der Raster der in Intervallen verteilten Hindernisse, die durch jeden der rechteckigen Positionierungsrahmen eingerahmt sind, als die dichten Hindernispunkte, wobei jeder der rechteckigen Positionierungsrahmen dazu konfiguriert ist, entsprechend einmal gemäß einer Einheitsabfahrdistanz in der Abfahrrichtung bewegt zu werden.

9. Verfahren zum Steuern von Reinigung gemäß Anspruch 8, wobei der Schritt 1 ferner Folgendes umfasst: Schritt 14, Kombinieren der Raster, die allen dichten Hindernispunkten entsprechen, die markiert sind, um eine dichte Hindernisregion zu erstellen, wenn die voreingestellte Anzahl von rechteckigen Positionierungsrahmen aufhört, sich zu bewegen.

10. Verfahren zum Steuern von Reinigung gemäß Anspruch 9, wobei die Raster der in Intervallen verteilten Hindernisse Raster von Hindernissen mit Ausnahme von Rastern von N Hindernissen sind, die kontinuierlich in den in dem Schritt 11 markierten Rastern der Hindernisse verteilt sind, wobei N eine Anzahl von kontinuierlich verteilten Rastern ist, die gemäß einer vorkonfigurierten Rastergröße in der Rasterkarte und einer tatsächlichen Größe des in der zu reinigenden Region markierten Hindernisses eingestellt ist,
wobei in dem Schritt 11 das Steuern des Reinigungsroboters, damit er eine Reinigung in der zu reinigenden Region gemäß dem voreingestellten Planungspfad in der " 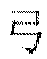 "-Form vornimmt, ohne das Hindernis zu umgehen, wenn der Reinigungsroboter das Hindernis in dem Reinigungsprozess detektiert, Folgendes umfasst: Steuern des Reinigungsroboters, damit er entlang des voreingestellten Planungspfads in der " 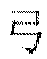 "-Form fährt, und Steuern eines Körpers des Reinigungsroboters, damit er sich um einen voreingestellten Winkel dreht, wenn der Reinigungsroboter mit einem Hindernis auf einem voreingestellten linearen Pfad des voreingestellten Planungspfads in der " 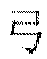 "-Form kollidiert, um so den Reinigungsroboter auf einen ungereinigten linearen Pfad mit einer voreingestellten Distanz von einem voreingestellten linearen Pfadabschnitt zu bewegen, indem eine aktuelle Fortbewegungsrichtung angepasst wird,
wobei der ungereinigte lineare Pfad zu dem voreingestellten Planungspfad in der " 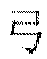 "-Form gehört und parallel zu dem voreingestellten linearen Pfad ist, die voreingestellte Distanz ein voreingestelltes Vielfaches einer Beabstandungsdistanz zwischen zwei benachbarten parallelen linearen Pfaden des voreingestellten Planungspfads in der " 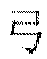 "-Form ist, das voreingestellte Vielfache mit einer Größe des aktuell mit dem Reinigungsroboter kollidierenden Hindernisses in Bezug steht,
wobei der Reinigungsroboter Reinigungsvorgänge in einem Prozess eines Bewegens von dem voreingestellten linearen Pfad zu dem ungereinigten linearen Pfad vornimmt, der von dem voreingestellten linearen Pfad um die voreingestellte Distanz beabstandet ist,
wobei in einem Prozess eines Steuerns des Körpers des Reinigungsroboters, damit er sich um den voreingestellten Winkel dreht, unter einer Bedingung, dass detektiert wird, dass der Reinigungsroboter mit einem Hindernis kollidiert, der Reinigungsroboter gesteuert wird, damit er entlang einer Kante des Hindernisses fährt, bis er den ungereinigten linearen Pfad mit der voreingestellten Distanz von dem voreingestellten linearen Pfad erreicht, um so weiterhin in der " 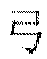 "-Form geplant zu reinigen, ohne das Hindernis vollständig zu umgehen,
wobei in einem Prozess eines Steuerns des Reinigungsroboters, damit er sich von einer voreingestellten Startpunktposition zu dem voreingestellten linearen Pfad bewegt, unter einer Bedingung, dass die Hinderniskollision detektiert wird, der Reinigungsroboter gesteuert wird, damit er andere ungereinigte lineare Pfade des voreingestellten Planungspfads in der " 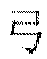 "-Form heraussucht, sodass der Reinigungsroboter kontinuierlich eine Reinigung gemäß herausgesuchten ungereinigten Pfaden vornimmt, um so das vor dem Suchen detektierte Hindernis zu vermeiden, wobei sich die voreingestellte Startpunktposition außerhalb des voreingestellten linearen Pfads befindet.

11. Verfahren zum Steuern von Reinigung gemäß Anspruch 10, wobei in dem Schritt 12 das Einstellen der Standardeinheitsregion dichter Hindernisse auf der Rasterkarte Folgendes umfasst: Steuern des rechteckigen Gleitrahmens, damit er sich auf der Rasterkarte bewegt, Markieren der Raster der in Intervallen verteilten Hindernisse, die durch den rechteckigen Gleitrahmen auf der Rasterkarte eingerahmt sind, als ungereinigter Zustand, und Aufzeichnen der Anzahl der eingerahmten und in Intervallen verteilten Raster der Hindernisse in Echtzeit; und Einstellen einer rechteckigen Region, die aktuell durch den rechteckigen Gleitrahmen eingerahmt ist, als die Standardeinheitsregion dichter Hindernisse, wenn die Anzahl der in Intervallen verteilten Raster der Hindernisse, die durch den rechteckigen Gleitrahmen eingerahmt sind, größer oder gleich einem ersten Dichteschwellenwert ist, wobei der erste Dichteschwellenwert verwendet wird, um eine Verteilungsdichte der dichten Hindernispunkte in der Rasterkarte anzugeben, und genügt, um Lückenregionen zwischen den in Intervallen verteilten Hindernissen zu Reinigung-versäumt-Regionen des Reinigungsroboters zu machen.

12. Verfahren zum Steuern von Reinigung gemäß Anspruch 11, wobei in dem Schritt 13 das Steuern jedes der rechteckigen Positionierungsrahmen, damit sie sich entsprechend kontinuierlich in der Abfahrrichtung bewegen oder sich entsprechend nicht kontinuierlich in der Abfahrrichtung bewegen, gemäß der Beziehung zwischen dem Verhältnis der Fläche der neuen Region, die durch jeden der rechteckigen Positionierungsrahmen nach der Bewegung relativ zu der vor der Bewegung eingerahmt ist, zu der Fläche der Region, die durch den rechteckigen Positionierungsrahmen entsprechend vor der Bewegung eingerahmt ist, und der Änderung der Anzahl der Raster der in Intervallen verteilten Hindernisse, die durch den rechteckigen Positionierungsrahmen eingerahmt sind, die vor und nach der Bewegung gleich ist, Folgendes umfasst:
Beurteilen, jedes Mal, wenn einer der rechteckigen Positionierungsrahmen entsprechend einmal um die Einheitsabfahrdistanz in der Abfahrrichtung bewegt wird, ob ein Verhältnis der Anzahl der Raster der in Intervallen verteilten Hindernisse, die durch den rechteckigen Positionierungsrahmen nach der Bewegung eingerahmt sind, zu der Anzahl der Raster der in Intervallen verteilten Hindernisse, die durch den rechteckigen Positionierungsrahmen vor der Bewegung eingerahmt sind, größer oder gleich einem Flächenverhältnis einer Region, die den rechteckigen Positionierungsrahmen vor der Bewegung nicht überlappt, in dem rechteckigen Positionierungsrahmen nach der Bewegung ist, falls das Verhältnis der Anzahl der Raster der in Intervallen verteilten Hindernisse, die durch den rechteckigen Positionierungsrahmen nach der Bewegung eingerahmt sind, zu der Anzahl der Raster der in Intervallen verteilten Hindernisse, die durch den rechteckigen Positionierungsrahmen vor der Bewegung eingerahmt sind, größer oder gleich dem Flächenverhältnis der Region ist, Steuern des rechteckigen Positionierungsrahmens, damit er sich kontinuierlich in einer gleichen Abfahrrichtung um die Einheitsabfahrdistanz bewegt, und falls das Verhältnis der Anzahl der Raster der in Intervallen verteilten Hindernisse, die durch den rechteckigen Positionierungsrahmen nach der Bewegung eingerahmt sind, zu der Anzahl der Raster der in Intervallen verteilten Hindernisse, die durch den rechteckigen Positionierungsrahmen vor der Bewegung eingerahmt sind, nicht größer oder gleich dem Flächenverhältnis der Region ist, Steuern des rechteckigen Positionierungsrahmens, damit er aufhört, sich zu bewegen,
wobei das Flächenverhältnis der Region, die den rechteckigen Positionierungsrahmen vor der Bewegung nicht überlappt, in dem rechteckigen Positionierungsrahmen nach der Bewegung ein Verhältnis der Fläche der neuen Region, die durch den rechteckigen Positionierungsrahmen nach der Bewegung relativ zu der vor der Bewegung eingerahmt ist, zu der Fläche der Region ist, die durch den rechteckigen Positionierungsrahmen eingerahmt ist, die vor der Bewegung gleich ist.

13. Verfahren zum Steuern von Reinigung gemäß einem der Ansprüche 10-12, wobei die rechteckigen Positionierungsrahmen quadratische Rahmen sind und die voreingestellte Anzahl 8 ist, und die Abfahrrichtungen, die symmetrisch um den Mittelpunkt des Erstellungsstartpunkts sind, jeweils Folgendes umfassen: eine nach rechts gewandte Richtung einer horizontalen Seitenlänge eines quadratischen Rahmens, der als die Standardeinheitsregion dichter Hindernisse konfiguriert ist, eine nach links gewandte Richtung der horizontalen Seitenlänge des quadratischen Rahmens, der als die Standardeinheitsregion dichter Hindernisse konfiguriert ist, eine nach oben gewandte Richtung einer längsverlaufenden Seitenlänge des quadratischen Rahmens, der als die Standardeinheitsregion dichter Hindernisse konfiguriert ist, eine nach unten gewandte Richtung der längsverlaufenden Seitenlänge des quadratischen Rahmens, der als die Standardeinheitsregion dichter Hindernisse konfiguriert ist, eine nach oben links gewandte Richtung einer Diagonalen des quadratischen Rahmens, der als die Standardeinheitsregion dichter Hindernisse konfiguriert ist, eine nach unten links gewandte Richtung der Diagonalen des quadratischen Rahmens, der als die Standardeinheitsregion dichter Hindernisse konfiguriert ist, eine nach oben rechts gewandte Richtung der Diagonalen des quadratischen Rahmens, der als die Standardeinheitsregion dichter Hindernisse konfiguriert ist, und eine nach unten rechts gewandte Richtung der Diagonalen des quadratischen Rahmens, der als die Standardeinheitsregion dichter Hindernisse konfiguriert ist.

## Revendications

1. Procédé de commande de nettoyage sur la base d'obstacles denses, dans lequel le procédé comprend : étape 1, le marquage de points d'obstacles denses selon un certain nombre de caractéristiques de quadrillages d'obstacles encadrés par un cadre rectangulaire coulissant qui est prédéfini dans une carte quadrillée, puis passage à l'étape 2 ; étape 2, la planification, en fonction des points d'obstacles denses marqués dans la carte quadrillée, de chemins de navigation dont une position de point final correspond à un point d'obstacle dense et qui ne dépasse pas des quadrillages d'autres obstacles, puis passage à l'étape 3 ; et étape 3, la commande, en fonction d'une collision d'obstacle détectée par le robot de nettoyage, au robot de nettoyage de terminer un déplacement en cercle autour d'un obstacle actuellement en collision dans un processus de navigation du robot de nettoyage vers une position réelle correspondant à chacun des points d'obstacles denses en fonction des chemins de navigation planifiés à l'étape 2, et le marquage d'un état de nettoyage d'un quadrillage correspondant à l'obstacle actuellement en collision, dans lequel le robot de nettoyage continue d'effectuer des opérations de nettoyage tout en se déplaçant autour de l'obstacle actuellement en collision ;
**caractérisé en ce que**
à l'étape 3, la commande, en fonction de la collision d'obstacle détectée par le robot de nettoyage, au robot de nettoyage de terminer le déplacement en cercle autour de l'obstacle actuellement en collision dans le processus de navigation du robot de nettoyage jusqu'à la position réelle correspondant à chacun des points d'obstacles denses selon les chemins de navigation planifiés à l'étape 2, et le marquage de l'état de nettoyage du quadrillage correspondant à l'obstacle actuellement en collision comprend : la commande, avant que le robot de nettoyage ne soit dirigé jusqu'à la position réelle correspondant au point d'obstacle dense à nettoyer selon les chemins de navigation planifiés à l'étape 2, au robot de nettoyage de se déplacer en cercle autour de l'obstacle actuellement en collision dans la condition où la collision avec un obstacle est détectée, et le marquage, une fois que le robot de nettoyage a terminé son déplacement en cercle autour de l'obstacle actuellement en collision, de l'obstacle comme un état d'obstacle nettoyé ; et la commande, lorsque le robot de nettoyage est dirigé jusqu'à la position réelle correspondant au point d'obstacle dense à nettoyer, au robot de nettoyage de parcourir un cercle autour d'un obstacle au niveau du point d'obstacle dense à nettoyer dans une condition où une collision avec l'obstacle au point d'obstacle dense à nettoyer est détectée, et le marquage, une fois que le robot de nettoyage a terminé son déplacement en cercle autour de l'obstacle au niveau du point d'obstacle dense à nettoyer, du point d'obstacle dense à nettoyer come l'état d'obstacle nettoyé, dans lequel le point d'obstacle dense à nettoyer est un point d'obstacle dense préconfiguré pour le nettoyage ;
dans lequel l'étape 3 comprend en outre : le marquage, une fois que le robot de nettoyage a navigué jusqu'à la position réelle correspondant au point d'obstacle dense à nettoyer, du point d'obstacle dense à nettoyer comme un état de surface nettoyée dans la condition où le robot de nettoyage est détecté pour dépasser directement la position réelle correspondant au point d'obstacle dense à nettoyer, dans lequel le point d'obstacle dense à nettoyer est un obstacle cible présélectionné à nettoyer.

2. Procédé de commande de nettoyage selon la revendication 1, dans lequel le procédé de commande de nettoyage comprend en outre : l'étape 4, la commande, une fois que le robot de nettoyage a été amené à franchir tous les points d'obstacles denses qui sont marqués selon les chemins de navigation planifiés à l'étape 2, au robot de nettoyage d'être dirigé jusqu'à une région non nettoyée, puis le retour à l'étape 1 pour marquer de nouveaux points d'obstacles denses, et la répétition des étapes précédentes jusqu'à ce que le robot de nettoyage ait traversé toutes les régions correspondant à la carte quadrillée.

3. Procédé de commande de nettoyage selon la revendication 1, dans lequel lorsque tous les points d'obstacles denses marqués à l'étape 1 sont marqués comme étant l'état d'obstacle nettoyé ou l'état de surface nettoyée de manière correspondante, l'étape 4 est exécutée.

4. Procédé de commande de nettoyage selon la revendication 2, dans lequel l'étape 3 comprend en outre : l'étape 31, la commande, avant que le robot de nettoyage ne soit dirigé jusqu'à la position réelle correspondant au point d'obstacle dense à nettoyer selon un premier chemin de navigation prédéfini, au robot de nettoyage de parcourir un cercle autour d'un obstacle dans la condition où une collision avec l'obstacle est détectée, tout en continuant simultanément à détecter si le robot de nettoyage est dirigé jusqu' à la position réelle correspondant au point d'obstacle dense à nettoyer, puis passage à l'étape 32 ; étape 32, le passage à l'étape 33 dans la condition où le robot de nettoyage est détecté comme n'étant pas dirigé jusqu'à la position réelle correspondant au point d'obstacle dense à nettoyer lorsque le robot de nettoyage termine de parcourir le cercle autour de l'obstacle qui est le même ; étape 33, la détermination si un nombre de fois que l'étape 32 est exécutée atteint 3, si le nombre de fois que l'étape 32 est exécutée atteint 3, le marquage du point d'obstacle dense à nettoyer comme l'état d'obstacle nettoyé, et si le nombre de fois que l'étape 32 est exécutée n'atteint pas 3, le passage à l'étape 34 ; étape 34, la recherche d'un deuxième chemin de navigation prédéfini parmi tous les chemins de navigation planifiés à l'étape 2, dans lequel une position de quadrillage de point final du deuxième chemin de navigation prédéfini est le point d'obstacle dense à nettoyer, et le deuxième chemin de navigation prédéfini est différent du premier chemin de navigation prédéfini, puis le passage à l'étape 35 ; et étape 35, la commande au robot de nettoyage de se déplacer le long du deuxième chemin de navigation prédéfini recherché à l'étape 34, et la répétition de l'étape 31 à l'étape 34 jusqu'à ce que le robot de nettoyage soit détecté comme étant dirigé jusqu'à la position réelle correspondant au point d'obstacle dense à nettoyer ou que le nombre de fois que l'étape 32 est exécutée soit déterminé comme atteignant 3, dans lequel après le retour de l'étape 35 à l'étape 31, le premier chemin de navigation prédéfini à l'étape 31 est remplacé par le deuxième chemin de navigation prédéfini à l'étape 34, et les chemins de navigation planifiés à l'étape 2 comprennent le premier chemin de navigation prédéfini et le deuxième chemin de navigation prédéfini.

5. Procédé de commande de nettoyage selon la revendication 4, dans lequel la détection si le robot de nettoyage est dirigé jusqu'à la position réelle correspondant au point d'obstacle dense à nettoyer comprend : la détermination que le robot de nettoyage est dirigé jusqu'à la position réelle correspondant au point d'obstacle dense à nettoyer dans une condition où une distance entre une position actuelle du robot de nettoyage et la position réelle correspondant au point d'obstacle dense à nettoyer est inférieure à un quart du diamètre d'un corps du robot de nettoyage, et la détermination que le robot de nettoyage n'est pas dirigé jusqu'à la position réelle correspondant au point d'obstacle dense à nettoyer dans la condition où la distance entre la position actuelle du robot de nettoyage et la position réelle correspondant au point d'obstacle dense à nettoyer n'est pas inférieure au quart du diamètre du corps du robot de nettoyage.

6. Procédé de commande de nettoyage selon l'une quelconque des revendications 1 à 5, dans lequel l'évaluation si le robot de nettoyage termine de parcourir le cercle autour de l'obstacle actuellement en collision comprend : l'acquisition d'une position de collision du robot de nettoyage et de l'obstacle avant la commande au robot de nettoyage de parcourir le cercle autour de l'obstacle ; puis la commande au robot de nettoyage de commencer à se déplacer autour de l'obstacle à partir de la position de collision, la détermination si un angle de rotation du robot de nettoyage est supérieur ou égal à 360 degrés et si une distance entre une position actuelle du robot de nettoyage et la position de collision est inférieure au quart du diamètre d'un corps du robot de nettoyage, si l'angle de rotation du robot de nettoyage est supérieur ou égal à 360 degrés et que la distance entre la position actuelle du robot de nettoyage et la position de collision est inférieure au quart du diamètre du corps du robot de nettoyage, la détermination que le robot de nettoyage termine de parcourir le cercle autour de l'obstacle actuellement en collision, et si l'angle de rotation du robot de nettoyage n'est pas supérieur ou égal à 360 degrés, ou la distance entre la position actuelle du robot de nettoyage et la position de collision n'est pas inférieure au quart du diamètre du corps du robot de nettoyage, la détermination que le robot de nettoyage ne termine pas de parcourir le cercle autour de l'obstacle actuellement en collision.

7. Procédé de commande de nettoyage selon l'une quelconque des revendications 1 à 5, dans lequel l'évaluation si le robot de nettoyage termine de parcourir le cercle autour de l'obstacle actuellement en collision comprend : l'acquisition d'une position de collision du robot de nettoyage et de l'obstacle avant la commande au robot de nettoyage de parcourir le cercle autour de l'obstacle ; puis la commande au robot de nettoyage de commencer à se déplacer autour de l'obstacle à partir de la position de collision, la détermination si un angle de rotation du robot de nettoyage est supérieur ou égal à 400 degrés, si l'angle de rotation du robot de nettoyage est supérieur ou égal à 400 degrés, la détermination que le robot de nettoyage termine de parcourir le cercle autour de l'obstacle actuellement en collision, et si l'angle de rotation du robot de nettoyage n'est pas supérieur ou égal à 400 degrés, la détermination que le robot de nettoyage ne termine pas de parcourir le cercle autour de l'obstacle actuellement en collision.

8. Procédé de commande de nettoyage selon la revendication 1, dans lequel l'étape 1 comprend spécifiquement :
étape 11, la commande au robot de nettoyage d'effectuer un nettoyage dans une région à nettoyer selon un chemin de planification prédéfini en forme de " S", et la commande au robot de nettoyage de marquer le quadrillage de l'obstacle dans la carte quadrillée créée en temps réel sans contournement de l'obstacle lorsque le robot de nettoyage détecte l'obstacle lors d'un processus de nettoyage, dans lequel les quadrillages des obstacles comprennent des quadrillages d'obstacles répartis à intervalles ;
étape 12, la définition, en fonction d'un certain nombre de quadrillages d'obstacles répartis à intervalles encadrés par le cadre rectangulaire coulissant dans un processus par lequel le cadre rectangulaire coulissant est déplacé sur la carte quadrillée, d'une région unitaire standard d'obstacles denses sur la carte quadrillée, puis la définition d'un nombre prédéfini de cadres rectangulaires de positionnement ayant des tailles cohérentes avec le cadre rectangulaire coulissant pour prendre un centre de la région unitaire standard d'obstacles denses comme point de départ de création, puis la commande du déplacement des cadres rectangulaires de positionnement, à partir du point de départ de création, dans un nombre prédéfini de directions de parcours sur la carte quadrillée qui sont respectivement symétriques par rapport au centre du point de départ de création ;
et étape 13, la commande à chacun des cadres rectangulaires de positionnement de se déplacer en continu dans la direction de parcours de manière correspondante ou de ne pas se déplacer de manière continue dans la direction de parcours de manière correspondante selon une relation entre un rapport d'une surface d'une nouvelle région encadrée par chacun des cadres rectangulaires de positionnement après un déplacement par rapport à celle avant le déplacement et une surface d'une région encadrée par le cadre rectangulaire de positionnement de manière correspondante avant le déplacement et un changement du nombre de quadrillages d'obstacles répartis à intervalles encadrés par le cadre rectangulaire de positionnement qui est le même avant et après le déplacement, et le marquage des quadrillages d'obstacles répartis à intervalles encadrés par chacun des cadres rectangulaires de positionnement en tant que points d'obstacles denses, dans lequel chacun des cadres rectangulaires de positionnement est configuré pour être déplacé une fois dans la direction de parcours de manière correspondante en fonction d'une distance de parcours unitaire.

9. Procédé de commande de nettoyage selon la revendication 8, dans lequel l'étape 1 comprend en outre : étape 14, la combinaison, lorsque le nombre prédéfini de cadres rectangulaires de positionnement arrêtent de se déplacer, des quadrillages correspondant à tous les points d'obstacles denses qui sont marqués pour créer une région d'obstacles denses.

10. Procédé de commande de nettoyage selon la revendication 9, dans lequel les quadrillages d'obstacles répartis à intervalles sont des quadrillages d'obstacles à l'exception de quadrillages de N obstacles répartis en continu dans les quadrillages d'obstacles marqués à l'étape 11, dans lequel N est un nombre de quadrillages répartis en continu défini en fonction d'une taille de quadrillage préconfigurée dans la carte quadrillée et d'une taille réelle de l'obstacle marqué dans la région à nettoyer,
dans lequel, à l'étape 11, la commande au robot de nettoyage d'effectuer un nettoyage dans la région à nettoyer selon le chemin de planification prédéfini en forme de " 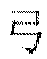 " sans contourner l'obstacle lorsque le robot de nettoyage détecte l'obstacle dans le processus de nettoyage comprend : la commande au robot de nettoyage de se déplacer le long du chemin de planification prédéfini en forme de " S", et la commande, lorsque le robot de nettoyage entre en collision avec un obstacle sur un chemin linéaire prédéfini du chemin de planification prédéfini en forme de " 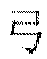 ", à un corps du robot de nettoyage de pivoter selon un angle prédéfini, de manière à déplacer le robot de nettoyage vers un chemin linéaire non nettoyé ayant une distance prédéfinie par rapport à une section de chemin linéaire prédéfinie en ajustant une direction d'avancement actuelle,
dans lequel le chemin linéaire non nettoyé appartient au chemin de planification prédéfini en forme de " 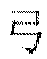 " et est parallèle au chemin linéaire prédéfini, la distance prédéfinie est un multiple prédéfini d'une distance d'espacement entre deux chemins linéaires parallèles adjacents du chemin de planification prédéfini en forme de " 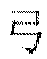 ", le multiple prédéfini est lié à une taille de l'obstacle actuellement en collision avec le robot de nettoyage,
dans lequel le robot de nettoyage effectue des opérations de nettoyage dans un processus de déplacement du chemin linéaire prédéfini au chemin linéaire non nettoyé espacé du chemin linéaire prédéfini par la distance prédéfinie,
dans lequel, dans un processus de commande au corps du robot de nettoyage de pivoter selon l'angle prédéfini, dans une condition où le robot de nettoyage est détecté comme entrant en collision avec un obstacle, le robot de nettoyage est commandé pour se déplacer le long d'un bord de l'obstacle jusqu'à atteindre le chemin linéaire non nettoyé ayant la distance prédéfinie par rapport au chemin linéaire prédéfini, de manière à maintenir le nettoyage planifié en forme de " 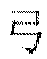 ", sans contourner complètement l'obstacle,
dans lequel, dans un processus de commande au robot de nettoyage de se déplacer à partir d'une position de point de départ prédéfinie jusqu' au chemin linéaire prédéfini, dans une condition où la collision avec un obstacle est détectée, le robot de nettoyage est commandé pour rechercher d'autres chemins linéaires non nettoyés du chemin de planification prédéfini en forme de "S", de sorte que le robot de nettoyage effectue un nettoyage en continu conformément à des chemins non nettoyés recherchés, de manière à éviter l'obstacle détecté avant la recherche, dans lequel la position de point de départ prédéfinie est située à l'extérieur du chemin linéaire prédéfini.

11. Procédé de commande de nettoyage selon la revendication 10, dans lequel, à l'étape 12, la définition de la région unitaire standard d'obstacles denses sur la carte quadrillée comprend : la commande au cadre rectangulaire coulissant de se déplacer sur la carte quadrillée, le marquage des quadrillages des obstacles répartis à intervalles encadrés par le cadre rectangulaire coulissant sur la carte quadrillée comme un état non nettoyé, et l'enregistrement du nombre de quadrillages des obstacles encadrés et répartis à intervalles en temps réel ; et la définition d'une région rectangulaire actuellement encadrée par le cadre rectangulaire coulissant en tant que région unitaire standard d'obstacles denses lorsque le nombre de quadrillages d'obstacles répartis à intervalles encadrés par le cadre rectangulaire coulissant est supérieur ou égal à un premier seuil de densité, dans lequel un premier seuil de densité est utilisé pour indiquer une densité de répartition des points d'obstacles denses sur la carte quadrillée et suffit pour faire en sorte que les régions d'espacement entre les obstacles répartis à intervalles deviennent des régions manquées par le nettoyage du robot de nettoyage.

12. Procédé de commande de nettoyage selon la revendication 11, dans lequel, à l'étape 13, la commande à chacun des cadres rectangulaires de positionnement de se déplacer en continu dans la direction de parcours de manière correspondante ou de ne pas se déplacer en continu dans la direction de parcours de manière correspondante selon la relation entre le rapport de la surface de la nouvelle région encadrée par chacun des cadres rectangulaires de positionnement après le déplacement par rapport à celle avant le déplacement et la surface de la région encadrée par le cadre rectangulaire de positionnement de manière correspondante avant le déplacement et le changement du nombre de quadrillages d'obstacles répartis à intervalles encadrés par le cadre rectangulaire de positionnement qui soit le même avant et après le déplacement comprend :
l'évaluation, chaque fois qu'un des cadres rectangulaires de positionnement est déplacé une fois dans la direction de parcours en correspondance de la distance de parcours unitaire, si un rapport entre le nombre de quadrillages d'obstacles répartis à intervalles encadrés par le cadre rectangulaire de positionnement après le déplacement et le nombre des quadrillages d'obstacles répartis à intervalles encadrés par le cadre rectangulaire de positionnement avant le déplacement est supérieur ou égal à un rapport de surface d'une région, qui ne chevauche pas le cadre rectangulaire de positionnement avant le déplacement, dans le cadre rectangulaire de positionnement après le déplacement, si le rapport entre le nombre de quadrillages d'obstacles répartis à intervalles encadrés par le cadre rectangulaire de positionnement après le déplacement et le nombre de quadrillages d'obstacles répartis à intervalles encadrés par le cadre rectangulaire de positionnement avant le déplacement est supérieur ou égal au rapport de surface de la région, la commande au cadre rectangulaire de positionnement de se déplacer en continu dans une même direction de parcours par la distance de parcours unitaire, et si le rapport du nombre de quadrillages d'obstacles répartis à intervalles encadrés par le cadre rectangulaire de positionnement après le déplacement et le nombre de quadrillages d'obstacles répartis à intervalles encadrés par le cadre rectangulaire de positionnement avant le déplacement n'est pas supérieur ou égal au rapport de surface de la région, la commande au cadre rectangulaire de positionnement d'arrêter de se déplacer,
dans lequel le rapport de surface de la région, qui ne chevauche pas le cadre rectangulaire de positionnement avant le déplacement, dans le cadre rectangulaire de positionnement après le déplacement, est un rapport de la surface de la nouvelle région encadrée par le cadre rectangulaire de positionnement après le déplacement par rapport à celle avant le déplacement et la surface de la région encadrée par le cadre rectangulaire de positionnement qui est la même avant le déplacement.

13. Procédé de commande de nettoyage selon l'une quelconque des revendications 10 à 12, dans lequel les cadres rectangulaires de positionnement sont des cadres carrés, et le nombre prédéfini est 8 ; et les directions de parcours qui sont symétriques par rapport au centre du point de départ de création comprennent respectivement : une direction vers la droite d'une longueur de côté horizontal d'un cadre carré configuré en tant que région unitaire standard d'obstacle dense, une direction vers la gauche de la longueur de côté horizontal du cadre carré configuré comme région unitaire standard d'obstacle dense, une direction vers le haut d'une longueur de côté longitudinal du cadre carré configuré comme région unitaire standard d'obstacle dense, une direction vers le bas de la longueur de côté longitudinal du cadre carré configuré comme région unitaire standard d'obstacle dense, une direction supérieure gauche d'une diagonale du cadre carré configuré comme région unitaire standard d'obstacle dense, une direction inférieure gauche de la diagonale du cadre carré configuré comme région unitaire standard d'obstacle dense, une direction supérieure droite de la diagonale du cadre carré configuré comme région unitaire standard d'obstacle dense, et une direction inférieure droite de la diagonale du cadre carré configuré comme région unitaire standard d'obstacle dense.
